# EUROPEAN PATENT SPECIFICATION

(11) **EP 2 380 851 B1**
(45) Date of publication and mention of the grant of the patent: **04.09.2013**
(21) Application number: 09833438.6
(22) Date of filing: 15.12.2009
(51) Int. Cl.: C01G 25/00, C01G 25/02

(54) **METHOD FOR PRODUCING YTTRIUM OXIDE-STABILIZED ZIRCONIUM OXIDE SOL**
VERFAHREN ZUR HERSTELLUNG VON YTTRIUMOXIDSTABILISIERTEM ZIRCONIUMOXIDSOL
PROCÉDÉ DE PRODUCTION D'UNE SOLUTION D'OXYDE DE ZIRCONIUM STABILISÉE PAR DE L'OXYDE D'YTTRIUM

(30) Priority: 16.12.2008 JP 2008319379
(43) Date of publication of application: 26.10.2011
(73) Proprietor: Nissan Chemical Industries, Ltd., Chiyoda-ku Tokyo 101-0054 (JP)
(72) Inventor: OTA, Isao, Sodegaura-shi Chiba 299-0266 (JP); TSUIHIJI, Natsumi, Sodegaura-shi Chiba 299-0266 (JP)
(74) Representative: HOFFMANN EITLE
(86) International application number: PCT/JP2009/070918
(87) International publication number: WO 2010/071135

(56) References cited:
- EP-A2- 0 337 472
- JP-A- 2008 184 339
- JP-A- 2008 184 339
- G. DELL'AGLI ET G. MASCOLO: "hydrothermal synthesis of ZrO2-Y2O3 solid solutions at low temperature", JOURNAL OF THE EUROPEAN CERAMIC SOCIETY, vol. 20, 2000, pages 139-145, XP002679036,
- GEUZENS E ET AL: "Synthesis and mechanical and tribological characterization of alumina-yttria stabilized zirconia (YSZ) nanocomposites with YSZ synthesized by means of an aqueous solution-gel method or a hydrothermal route", CERAMICS INTERNATIONAL, ELSEVIER, AMSTERDAM, NL, vol. 34, no. 5, 1 July 2008 (2008-07-01), pages 1315-1325, XP022667000, ISSN: 0272-8842, DOI: 10.1016/J.CERAMINT.2007.03.001 [retrieved on 2008-05-15]
- J.P. MARKOVIC ET AL.: "Synthesis of zirconia colloidal dispersions ny forced hydrolysis", JOURNAL OF THE SERBIAN CHEMICAL SOCIETY, vol. 71, no. 6, 2005, pages 613-619, XP002679037,
- H. VESTEGHEM ET AL.: 'Hydrothermal synthesis of colloidal zirconia' KEY ENGINEERING MATERIALS vol. 132/136, 1997, pages 129 - 132, XP008157078
- HELEN REVERON ET AL.: 'Synthesis and Thermal Behaviour of Nanostructured Zr02 Powders Obtained Under Hydrothermal Conditions' JOURNAL OF NANOSCIENCE AND NANOTECHNOLOGY vol. 5, no. 10, October 2005, pages 1643 - 1650, XP008154085

## Description

The present invention relates to a production method of an yttrium oxide-stabilized zirconium oxide aqueous sol characterised by subjecting a mixed aqueous solution of an yttrium carboxylate and zirconium oxyacetate as a starting raw material to hydrothermal treatment, and a production method of an yttrium oxide-stabilized zirconium oxide organic solvent sol including a process of displacing an aqueous medium of the aqueous sol with an organic solvent.

### BACKGROUND ART

As the production method of an yttrium oxide-stabilized zirconium oxide aqueous sol using a mixed aqueous solution of a zirconium salt and an yttrium salt as a starting raw material, there is disclosed a method including adding a mixed aqueous solution of zirconium oxychloride and yttrium chloride to a mixed aqueous solution of ammonia water and ammonium hydrogen carbonate to obtain a slurry; heating the obtained slurry at 150°C; subsequently adding hydrochloric acid to the resultant slurry to retrieve a precipitated phase separated into two layers; and diluting the precipitated phase with water. The particle contained in the sol obtained by this production method has a size of 200Å or less by an observation under a transmission electron microscope (see Patent Document 1).

There is also disclosed a method for producing zirconium oxide fine particles in which a rare earth element is solid-dissolved by subjecting a mixture produced by adding an alkaline aqueous solution to a mixed solution of zirconium oxyacetate and a rare earth metal acetate to make the pH of the mixture 8 or more as a starting raw material to a hydrothermal reaction at 300 to 400°C under 20 to 40 MPa (see Patent Document 2),

### Related-art Document

### Patent Document

Patent Document 1: Japanese Patent No. 3250243
Patent Document 2: Japanese Patent Publication Application No. 2008-184339

### DISCLOSURE OF THE INVENTION

### Problem to be Solved by the Invention

In the production method disclosed in Patent Document 1, zirconium oxide fine particles generated by heating are separated into two layers and then deflocculated, so that the fine particles are secondary-aggregated with each other and an yttrium oxide-stabilized zirconium oxide sol having high transparency cannot be obtained.

In the production method disclosed in Patent Document 2, the hydrothermal reaction is based on the conditions of a high reaction temperature of 300 to 400°C and a high reaction pressure of 20 to 40 MPa, so that the reaction apparatus for the hydrothermal reaction is subject to such a large constraint that the reaction apparatus has to be of a pressure resistant design of at least 20 MPa, and consequently, the method becomes costly. Accordingly, the above production method is disadvantageous for producing an yttrium oxide-stabilized zirconium oxide sol in mass production.

It is an object of the present invention to provide a production method of an yttrium oxide-stabilized zirconium oxide aqueous sol and organic solvent sol capable of producing a sol having extremely advantageous transparency with which the condition for the hydrothermal reaction is eased compared to that of a conventional method and secondary aggregation of the obtained colloidal particle is hardly caused

### Means for Solving the Problem

The present invention is to solve the above problems and has the gist below.
As a first aspect, a production method of an yttrium oxide-stabilized zirconium oxide aqueous sol is characterized by including a process of subjecting a mixed aqueous solution produced by dissolving an yttrium carboxylate and zirconium oxyacetate in water in an Y/(Y+Zr) atomic ratio in a range of 0.10 to 0.60 to hydrothermal treatment at 160 to 280°C for 2 hours or more.
As a second aspect, in the production method of an yttrium oxide-stabilized zirconium oxide aqueous sol according to the first aspect, the yttrium carboxylate is an acetate or a citrate.
As a third aspect, in the production method of an yttrium oxide-stabilized zirconium oxide aqueous sol according to the first aspect or the second aspect, a concentration of both the yttrium carboxylate and the zirconium oxyacetate in terms of metal oxides (Y₂O₃+ZrO₂) in the mixed aqueous solution is in a range of 1 to 10% by mass based on a total mass of the mixed aqueous solution.
As a fourth aspect, in the production method of an yttrium oxide-stabilized zirconium oxide aqueous sol according to any one of the first aspect to the third aspect, a COOH group/(Y+Zr) molar ratio in the mixed aqueous solution is in a range of 1.2 to 2.5,
As a fifth aspect, in the production method of an yttrium oxide-stabilized zirconium oxide aqueous sol according to the fourth aspect, the COOH group/(Y+Zr) molar ratio in the mixed aqueous solution is adjusted to a range of 1.2 to 2.5 by adding acetic acid or citric acid to the mixed aqueous solution.
As a sixth aspect, in the production method of an yttrium oxide-stabilized zirconium oxide aqueous sol according to any one of the first aspect to the fifth aspect, the mixed aqueous solution has a pH of 4.0 to 5.5.
As a seventh aspect, in the production method of an yttrium oxide-stabilized zirconium oxide aqueous sol according to the sixth aspect, the pH of the mixed aqueous solution is adjusted to 4.0 to 5.5 by adding acetic acid or citric acid to the mixed aqueous solution.
As an eighth aspect, the production method of an yttrium oxide-stabilized zirconium oxide aqueous sol according to any one of the first aspect to the seventh aspect further includes a process of subjecting the mixed aqueous solution subjected to the hydrothermal treatment to demineralization treatment.
As a ninth aspect, a production method of an yttrium oxide-stabilized zirconium oxide organic solvent sol includes a process of displacing an aqueous medium of the yttrium oxide-stabilized zirconium oxide aqueous sol obtained by the production method as described in any one of the first aspect to the eighth aspect with an organic solvent by an organic solvent displacing method.

### Effects of the Invention

By the production method of the present invention, there can be produced an aqueous sol of yttrium oxide-stabilized zirconium oxide colloidal particles having a primary particle diameter measured by a transmission electron microscope observation of 2 to 15 nm and an extremely narrow particle diameter distribution and causing little secondary aggregation from a mixed aqueous solution in which yttrium oxide and zirconium oxide are dissolved in water. Further, by the production method of the present invention, there can be produced an aqueous sol having a light transmittance at a wavelength of 500 nm and in an optical path length of 10 mm of 70% or more from a mixed aqueous solution in which the concentration of both the yttrium oxide and the zirconium oxide in terms of metal oxides (Y₂O₃+ZrO₂) is adjusted to 1 to 10% by mass based on the total mass of the mixed aqueous solution. In the production method of the present invention, the condition for the hydrothermal treatment is 280°C or less, so that an inexpensive hydrothermal treatment apparatus subject to few constraints in pressure-resistant and corrosion-resistant design can be used. Accordingly, the production method of the present invention is suitable for the mass production of an yttrium oxide-stabilized zirconium oxide aqueous sol. Further, by displacing an aqueous medium of the aqueous sol obtained by the production method of the present invention with an organic solvent, an yttrium oxide-stabilized zirconium oxide organic solvent sol can be produced.

The yttrium oxide-stabilized zirconium oxide aqueous sol and its organic solvent sol produced by the present invention can be usefully applied to catalysts, polishing abrasive grains, resin fillers, solid electrolytes for a fuel battery, and the like.

### BRIEF DESCRIPTION OF THE DRAWINGS

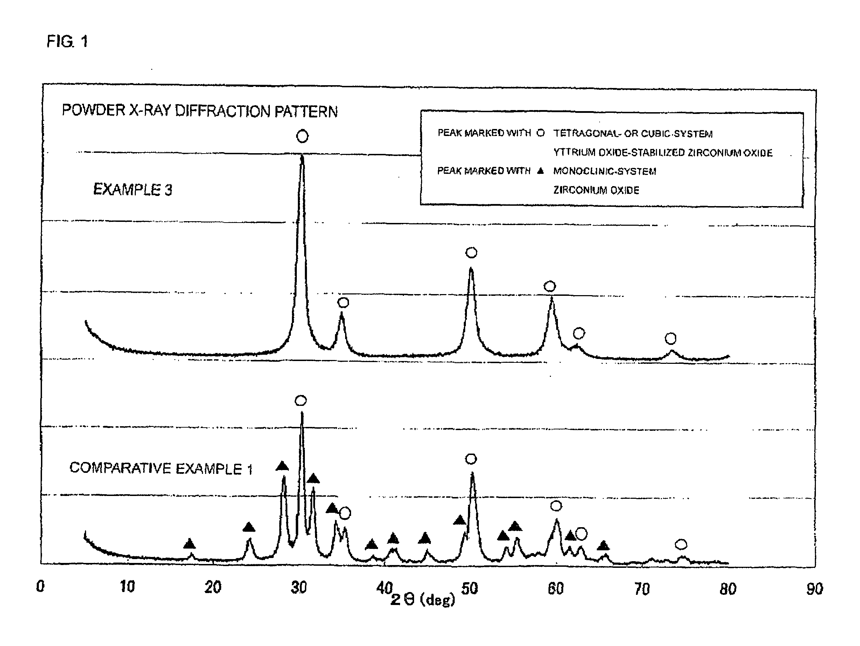

[FIG. 1] FIG. 1 is a powder X-ray diffraction diagram of dried powders of the aqueous sol produced in Example 3 and the aqueous sol produced in Comparative Example 1.

### BEST MODES FOR CARRYING OUT THE INVENTION

It is one of the characteristics of the present invention to use, as raw materials, an yttrium carboxylate and zirconium oxyacetate. By subjecting a mixed aqueous solution in which the raw materials are dissolved in water to hydrothermal treatment yttrium oxide is solid-dissolved in zirconium oxide, and there is produced an aqueous sol of a solid solution of yttrium oxide and zirconium oxide (hereinafter, yttrium oxide-stabilized zirconium oxide aqueous sol) in which a destruction of a crystal system is further suppressed compared to that in a zirconium oxide simple substance, so that the sol is stable with time. On the other hand, when, as the raw material, strong acid salts such as a chloride and a nitrate of yttrium and zirconium are used, during the hydrothermal treatment, the solid dissolution of yttrium oxide and zirconium oxide does not progress, so that fine colloidal particles of yttrium oxide and monoclinic spindle-shaped particles of zirconium oxide are separately generated. The spindle-shaped particle of zirconium oxide grows to a major axis of 40 nm or more, so that there is caused the problem that the generated aqueous sol has low transparency.

Preferred examples of the yttrium carboxylate of the present invention include an acetate and a citrate. Yttrium acetate is commercially available as a powder of a trihydrate of Y(CH₃COO)₃· 3H₂O. Yttrium citrate can be obtained as a 0.2 to 3% by mass Y(C₆H₅O₇) aqueous solution by dissolving yttrium hydroxide in a 1 to 20% by mass citric acid aqueous solution at room temperature.

The zirconium salt used in the present invention is zirconium oxyacetate. Zirconium oxyacetate is a compound of General Formula (1):

ZrOₐ(CH₃COCO)_{b} (1)

(where, a and b respectively satisfy: 0<a<2; 0<b<4; and 2a+b=4). Zirconium oxyacetate is commercially available in a shape of a powder or an aqueous solution.

An yttrium carboxylate and zirconium oxyacetate are added to pure water prepared beforehand so that the Y/(Y+Zr) atomic ratio falls into a range of 0.10 to 0.60, and by stirring the resultant mixture, a homogeneous mixed aqueous solution is prepared. When the Y/(Y+Zr) atomic ratio is less than 0.10, colloidal particles obtained after the hydrothermal treatment become spindle-shaped particles having a major axis of 40 nm or more, so that an aqueous sol having low transparency is generated, which is not preferred.

When the Y/(Y+Zr) atomic ratio is more than 0.60, the atomic ratio exceeds a range in which yttrium oxide is completely solid-dissolved in zirconium oxide, and it causes the phase separation into an yttria component and an yttria-stabilized zirconium component, which is not preferred.

The mixed aqueous solution is adjusted so that the concentration of both the yttrium carboxylate and zirconium oxyacetate in terms of metal oxides (Y₂O₃+ZrO₂) becomes 1 to 10% by mass, preferably 1 to 5% by mass based on the total mass of the mixed aqueous solution. When the concentration in terms of metal oxides (Y₂O₃+ZrO₂) is less than 1% by mass, the productivity of the mixed aqueous solution is decreased, and when the concentration is more than 10% by mass, colloidal particles in the obtained aqueous sol are easily aggregated, which is not preferred. In the present specification, the concentration in terms of metal oxides (Y₂O₃+ZrO₂) is a concentration in which the concentration of metal (yttrium and zirconium) salts contained in the solution or the aqueous sol is converted into a concentration based on the mass of metal oxides (yttrium oxide and zirconium oxide) into which all of the above metal salts arc converted, and is expressed in a % by mass concentration.

The COOH group/(Y+Zr) molar ratio in the mixed aqueous solution is preferably in a range of 1.2 to 2.5. The COOH group is derived from the carboxylate. In the case where the COOH group/(Y+Zr) molar ratio is less than 1.2, when a solution of an yttrium carboxylate and a solution of zirconium oxyacetate are mixed, immediately after the mixing, a gelation starts to be caused, which is not preferred. In the case where the COOH group/(Y+Zr) molar ratio is more than 2.5, the colloidal particle obtained after the hydrothermal treatment becomes a spindle-shaped particle having a major axis of 40 nm or more and an aqueous sol having low transparency is generated, which is not preferred. When in a step in which an yttrium carboxylate and zirconium oxyacetate that are raw materials arc mixed, the COOH group/(Y+Zr) molar ratio is less than 1.2, it is satisfactory that acetic acid or citric acid is added to the mixed aqueous solution to adjust the COOH group/(Y+Zr) molar ratio into a range of 1.2 to 2.5. Although acetic acid or citric acid may be added in a form of a pure substance or an aqueous solution thereof, these acids are added preferably in a form of an aqueous solution thereof. A preferred concentration of the aqueous, solution of acetic acid or citric acid is 1 to 20% by mass.

The mixed aqueous solution is adjusted to have a pH of 4.0 to 5.5. When the pH of the mixed aqueous solution is more than 5.5, by adding acetic acid or citric acid, the pH can be adjusted to a range of 4.0 to 5.5. Although acetic acid or citric acid may be added in a form of a pure substance or an aqueous solution thereof, these acids are added preferably in a form of an aqueous solution thereof. A preferred concentration of the aqueous solution of acetic acid or citric acid is 1 to 20% by mass.

When the mixed aqueous solution is charged into a pressure-resistant vessel, is then heated to 160 to 280°C, and is subjected to the hydrothermal treatment for 2 hours or more, the objective yttrium oxide-stabilized zirconium oxide aqueous sol is generated. In the case where the temperature for the hydrothermal treatment is less than 160°C, yttrium oxide-stabilized zirconium oxide colloidal particles are not satisfactorily generated and unreacted amorphous substances are mixed in the aqueous sol after the hydrothermal treatment, which is not preferred. On the other hand, in the case where the temperature for the hydrothermal treatment, is more than 280°C when the pressure-resistant vessel is a stainless steel vessel used for an ordinary chemical apparatus, a metal corrosion by acetic acid is caused, so that the degradation of the pressure-resistant vessel is caused. Further, the obtained yttrium oxide-stabilized zirconium oxide colloidal particles are aggregated, which is not preferred. When the temperature for the hydrothermal treatment is in a range of 160 to 280°C, the internal pressure of the pressure-resistant vessel is in a range of 0.6 to 7.0 MPa.

The time during which the mixed aqueous solution is subjected to the hydrothermal treatment is 2 hours or more, preferably 3 to 48 hours, more preferably 3 to 24 hours. When the time for the hydrothermal treatment is less than 2 hours, the yttrium oxide-stabilized zirconium oxide colloidal particles are not satisfactorily generated and unreacted amorphous substances are mixed in the aqueous sol after the hydrothermal treatment so that the transparency of the obtained sol is lowered, which is not preferred. On the other hand, in the present invention, the generation of the yttrium oxide-stabilized zirconium oxide colloidal particles is completed by hydrothermal treatment of 48 hours or less, so that it is hardly necessary to lengthen the time for hydrothermal treatment to more than 48 hours.

In the yttrium oxide-stabilized zirconium oxide aqueous sol obtained by the present invention, although the concentration of both yttrium and zirconium in terms of metal oxides (Y₂O₃+ZrO₂) after the hydrothermal treatment is 1 to 10% by mass based on the total mass of the yttrium oxide-stabilized zirconium oxide aqueous sol, the concentration can be enhanced to 30% by mass.

Although the yttrium oxide-stabilized zirconium oxide aqueous sol obtained by the present invention as it is can be applied to various applications, it is preferred to remove salts contained in the aqueous sol to apply the aqueous sol to various applications. Although as the demineralization treatment method of salts contained in the aqueous sol, any one of generally known methods such as an ultrafiltration method, a centrifugal filtration method, and an ion exchange method may be used, demineralization treatment by ultrafiltration is preferred, Particularly, by using a tube-type ultrafiltration membrane as the ultrafiltration, the demineralization can be effectively performed. The ultrafiltration is performed ordinarily under a condition of 5 to 80°C, for removing salts thoroughly while injecting pure water continuously or intermittently. Although the filtration time is not particularly limited, the filtration time is ordinarily 1 to 50 hour(s). The electric conductivity of the aqueous sol that has been subjected to the demineralization treatment becomes lowered. When the aqueous sol is demineralized to an electric conductivity of 0.5 mS/cm or less, the concentration of the yttrium oxide-stabilized zirconium oxide aqueous sol in terms of metal oxides (Y₂O₃+ZrO₂) after the demineralization treatment can be enhanced to 50% by mass based on the total mass of the aqueous sol.

The yttrium oxide-stabilized zirconium oxide aqueous sol obtained by the present invention can be converted into an organic solvent sol by displacing an aqueous medium thereof with an organic solvent. Examples of the organic solvent used for the replacement include methanol, ethanol, isopropanol, n-propanol, methyl ethyl ketone, methyl isobutyl ketone, toluene, xylene, methyl acetate, ethyl acetate, 2-methoxyethanol, ethylene glycol, and triethylene glycol.

As the method for displacing the aqueous medium with an organic solvent, any one of generally known methods may be used, and examples thereof include: a normal pressure distillation displacing method, a reduced pressure distillation displacing method, and an ultrafiltration displacing method; and a solvent extraction method. Among them, the normal pressure distillation displacing method and the reduced pressure distillation displacing method are preferably used.

When the aqueous medium of the yttrium oxide-stabilized zirconium oxide aqueous sol obtained by the present invention is replaced with an organic solvent, the used aqueous sol is preferably an aqueous sol that has been subjected to demineralization treatment by the above demineralization treatment method. The aqueous sol subjected to the demineralization treatment to be used has an electric conductivity of preferably 0.5 mS/cm or less, more preferably 0.3 mS/cm or less.

When the aqueous medium of the yttrium oxide-stabilized zirconium oxide aqueous sol obtained by the present invention is replaced with an organic solvent, by adding an oxycarboxylic acid and amines in an appropriate amount to the aqueous sol subjected to the demineralization treatment by the above demineralization treatment method, the pH of the aqueous sol is adjusted to that of neutral or alkaline beforehand, and then, the aqueous medium thereof can be replaced with an organic solvent.

Examples of the used oxycarboxylic acid include lactic acid, tartaric acid, malic acid, and citric acid. The oxycarboxylic acid is added preferably in a molar ratio of 0.01 to 0.5 relative to 1 mol of ZrO₂ contained in the aqueous sol.

Examples of the used amines include: alkyl amines such as ethylamine, propylamine, isopropylamine, diisopropylamine, triethylamine, tributylamine, dimethyloctylamine, dimethyldecylamine, and dimethyllaurylamine; cyclic amines such as 1,8-diaza-bicyclo (5, 4, 0) undecene-7, 1,5-diaza-bicyclo (4, 3, 0) nonene-5, and 1,4-diaza-bicyclo (2, 2, 2) octane; alkanolamines such as triethanolamine; diamines such as ethylenediamine; and quaternary ammonium hydroxides such as tetramethylammonium hydroxide, tetraethylammonium hydroxide, and monomethyltriethanolammonium hydroxide. The amines are added preferably in a molar ratio of 0.001 to 0.1 relative to 1 mol of ZrO₂ contained in the aqueous sol.

When the aqueous medium of the aqueous sol is replaced with an organic solvent having high hydrophobicity such as methyl ethyl ketone, methyl isobutyl ketone, toluene, xylene, methyl acetate, and ethyl acetate, the aqueous sol is preferably subjected to hydrophobization treatment using an organic silane compound and the like beforehand.

The yttrium oxide-stabilized zirconium oxide organic solvent sol obtained by the present invention is a stable sol having a concentration of both yttrium and zirconium contained in the sol in terms of metal oxides (Y₂O₃+ZrO₂) of 1 to 50% by mass based on the total mass of the sol.

The colloidal particle contained in the yttrium oxide-stabilized zirconium oxide aqueous sol obtained by the present invention is confirmed to be a crystal particle of yttrium oxide-stabilized zirconium oxide by a powder X-ray diffraction analysis. According to a powder X-ray diffraction analysis, at diffraction angles of 2θ= 30.0°, 50.2°, and 59.5°, main peaks are measured that substantially agree with characteristic peaks of yttrium oxide-stabilized zirconium oxide described in the ASTM card 30-1468.

The yttrium oxide-stabilized zirconium oxide aqueous sol obtained by the present invention is a sol of yttrium oxide-stabilized zirconium oxide colloidal particles having a primary particle diameter measured by a transmission electron microscope observation of 2 to 15 nm and an extremely narrow particle diameter distribution. The aqueous sol has a particle diameter measured by a dynamic light scattering method in a range of 5 to 30 nm. The measurement of a particle diameter by a dynamic light scattering method can be performed using a dynamic light scattering method measuring apparatus such as an N4 plus apparatus (manufactured by Coulter Electronics, Inc.) and DLS-6000 (manufactured by Otsuka Electronics Co., Ltd.).

The yttrium oxide-stabilized zirconium oxide aqueous sol obtained by the present invention is characterized by having high transparency. In the aqueous sol, when the concentration of both yttrium and zirconium contained in the aqueous sol in terms of metal oxides (Y₂O₃+ZrO₂) is adjusted to 1 to 10 % by mass based on the total mass of the aqueous sol, the light transmittance thereof at a wavelength of 500 nm and in an optical path length of 10 mm is 70% or more.

When the yttrium oxide-stabilized zirconium oxide aqueous sol and the organic solvent sol obtained by the present invention are left stand still at room temperature for one month or more, the physical properties thereof do not change, so that the sols are a stably dispersed sol causing no precipitation at all.

### Examples

Example 1 To 244.1 g of pure water, 2.3 g of a commercially available yttrium acetate powder (manufactured by Aldrich Corporation; concentration in terms of yttrium oxide (Y₂O₃): 35.5% by mass; and acetic acid concentration: 54.0% by mass) and 34.0 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added to prepare 279 g of a mixed aqueous solution having an Y/(Y+Zr) atomic ratio of 0.11, a COOH group/(Y+Zr) molar ratio of 1.5, a solid content (total mass of yttrium acetate and zirconium acetate in terms of oxides (Y₂O₃+ZrO₂)) concentration of 2.7% by mass, a pH of 4.7, and an electric conductivity of 2.40 mS/cm. The mixed aqueous solution was charged into a 300 ml SUS 316 autoclave vessel and was subjected to the hydrothermal treatment at 180°C for 6 hours. The internal pressure of the autoclave vessel was 0.82 MPa. The obtained aqueous sol had a pH of 3.3 and an electric conductivity of 0.90 mS/cm. The aqueous sol was concentrated under reduced pressure using an evaporator to adjust the solid content concentration of the aqueous sol to 5.0% by mass and was subjected to the measurement of the light transmittance at a wavelength of 550 nm and in an optical path length of 10 mm using a spectrophotometric colorimeter TC-1899 MK (manufactured by Tokyo Denshoku). As the result of the measurement, the light transmittance of the aqueous sol was 73%. Next, the aqueous sol concentrated to a solid content concentration of 5.0% by mass was washed with pure water using an ultrafiltration membrane to obtain 138 g of an aqueous sol having a pH of 5.3, an electric conductivity of 0.118 mS/cm, and a solid content concentration of 5.0% by mass. The aqueous sol having a solid content concentration of 5.0% by mass had a light transmittance at a wavelength of 550 nm and in an optical path length of 10 mm of 76%. When colloidal particles contained in the aqueous sol were observed under a transmission electron microscope, the colloidal particle was a cubic particle having a maximum value of the primary particle diameter of 12 nm and an average value of the primary particle diameter of 10 nm. The aqueous sol had a particle diameter measured by a dynamic light scattering method (measured by an N4 plus apparatus (manufactured by Coulter Electronics, Inc.)) of 25 nm. The aqueous sol was dried at 120°C and was subjected to a powder X-ray diffraction measurement to be found to have, at diffraction angles 2θ= 30.0°, 50.2°, and 59.5°, main peaks that agreed with characteristic peaks of tetragonal- or cubic-system yttrium oxide-stabilized zirconium oxide described in the ASTM card 30-1468. The X-ray crystallite thereof was 11.5 nm. Further, colloidal particles contained in the aqueous sol were quantitatively analyzed using an X-ray fluorescence apparatus (SEA 2120L; SII NanoTechnology Inc.) to be found to have a composition in which the Y/(Y+Zr) atomic ratio was 0.08. The aqueous sol concentrated to a solid content concentration of 5.0% by mass by an evaporator was left stand still at 25°C for one month, and it was found that there was no change in the physical properties and the appearance of the aqueous sol and the aqueous sol was stable.

Example 2 To 244.1 g of pure water, 2.9 g of a commercially available yttrium acetate powder (manufactured by Aldrich Corporation; concentration in terms of yttrium oxide (Y₂O₃): 35.5% by mass; and acetic acid concentration: 54.0% by mass) and 32.0 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added to prepare 279 g of a mixed aqueous solution having an Y/(Y+Zr) atomic ratio of 0.15, a COOH group/(Y+Zr) molar ratio of 1.5, a solid content (total mass of yttrium acetate and zirconium acetate in terms of oxides (Y₂O₃+ZrO₂)) concentration of 2,7% by mass, a pH of 4.8, and an electric conductivity of 3.05 mS/cm. The mixed aqueous solution was charged into a 300 ml SUS 316 autoclave vessel, and was subjected to the hydrothermal treatment at 180°C for 6 hours. The internal pressure of the autoclave vessel was 0.82 MPa. The obtained aqueous sol had a pH of 3.4 and an electric conductivity of 0.98 mS/cm. The aqueous sol was concentrated under reduced pressure using an evaporator to adjust the solid content concentration of the aqueous sol to 5.0% by mass and was subjected to the measurement of the light transmittance at a wavelength of 550 nm and in an optical path length of 10 mm using a spectrophotometric colorimeter TC-1899 MK. As the result of the measurement, the light transmittance of the aqueous sol was 77%. Next, the aqueous sol concentrated to a solid content concentration of 5.0% by mass was washed with pure water using an ultrafiltration membrane to obtain 133 g of an aqueous sol having a pH of 4.9, an electric conductivity of 0.157 mS/cm, a particle diameter measured by a dynamic light scattering method (measured by an N4 plus apparatus) of 24 run, and a solid content concentration of 5.0% by mass. The aqueous sol having a solid content concentration of 5.0% by mass had a light transmittance at a wavelength of 550 nm and in an optical path length of 10 mm of 80%. When colloidal particles contained in the aqueous sol were observed under a transmission electron microscope, the colloidal particle was a cubic particle having a maximum value of the primary particle diameter of 10 nm and an average value of the primary particle diameter of 8 nm. The aqueous sol was dried at 120°C and was subjected to a powder X-ray diffraction measurement to be found to have, at diffraction angles 2θ = 30.0°,50.2°, and 59.5°, main peaks that agreed with characteristic peaks of tetragonal- or cubic-system yttrium oxide-stabilized zirconium oxide described in the ASTM card 30-1468. The X-ray crystallite thereof was 10.7 nm. Further, colloidal particles contained in the aqueous sol were quantitatively analyzed using an X-ray fluorescence apparatus to be found to have a composition in which the Y/(Y+Zr) atomic ratio was 0.11. The aqueous sol concentrated to a solid content concentration of 5.0% by mass by an evaporator was left stand still at 25°C for one month, and it was found that there was no change in the physical properties and the appearance of the aqueous sol and the aqueous sol was stable.

Example 3 To 244,1 g of pure water, 4.0 g of a commercially available yttrium acetate powder (manufactured by Aldrich Corporation; concentration in terms of yttrium oxide (Y₂O₃): 35.5% by mass; and acetic acid concentration: 54.0% by mass) and 30.9 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added to prepare 279 g of a mixed aqueous solution having an Y/(Y+Zr) atomic ratio of 0.20, a COOH group/(Y+Zr) molar ratio of 1.6, a solid content (total mass of yttrium acetate and zirconium acetate in terms of oxides (Y₂O₃+ZrO₂)) concentration of 2.7% by mass, a pH of 4.8, and an electric conductivity of 3.76 mS/cm. The mixed aqueous solution was charged into a 300 ml SUS 316 autoclave vessel and was subjected to the hydrothermal treatment at 180°C for 6 hours. The internal pressure of the autoclave vessel was 0.82 MPa. The obtained aqueous sol had a pH of 3.6, an electric conductivity of 1 .44 mS/cm, and a particle diameter measured by a dynamic light scattering method (measured by an N4 plus apparatus) of 17 nm. The aqueous sol was concentrated under reduced pressure using an evaporator to adjust the solid content concentration of the aqueous sol to 5.0% by mass and was subjected to the measurement of the light transmittance at a wavelength of 550 nm and in an optical path length of 10 mm using a spectrophotometric colorimeter TC-1899 MK. As the result of the measurement, the light transmittance of the aqueous sol was 84%. Next, the aqueous sol concentrated to a solid content concentration of 5.0% by mass was washed with pure water using an ultrafiltration membrane to obtain 137 g of an aqueous sol having a pH of 5.0, an electric conductivity of 0.175 mS/cm, and a solid content concentration of 5.0% by mass. The aqueous sol having a solid content concentration of 5.0% by mass had a light transmittance at a wavelength of 550 nm and in an optical path length of 10 mm of 87%. When colloidal particles contained in the aqueous sol were observed under a transmission electron microscope, the colloidal particle was a cubic particle having a maximum value of the primary particle diameter of 8 nm and an average value of the primary particle diameter of 6 nm. The particle diameter measured by a dynamic light scattering method (measured by an N4 plus apparatus) of the aqueous sol was 16 nm. The aqueous sol was dried at 120°C and was subjected to a powder X-ray diffraction measurement, to be found to have, at diffraction angles 2θ= 30.0°, 50.2°, and 59.5°, main peaks that agreed with characteristic peaks of tetragonal- or cubic-system yttrium oxide-stabilized zirconium oxide described in the ASTM card 30-1468. The X-ray crystallite thereof was 9.4 nm. Further, colloidal particles contained in the aqueous sol were quantitatively analyzed using an X-ray fluorescence apparatus to be found to have a composition in which the Y/(Y+Zr) atomic ratio was 0.13. The aqueous sol concentrated to a solid content concentration of 5.0% by mass by an evaporator was left stand still at 25°C for one month, and it was found that there was no change in the physical properties and the appearance of the aqueous sol and the aqueous sol was stable.

Example 4 To 244.1 g of pure water, 7.5 g of a commercially available yttrium acetate powder (manufactured by Aldrich Corporation; concentration in terms of yttrium oxide (Y₂O₃): 35.5% by mass; and acetic acid concentration: 54.0% by mass) and 28.4 g of a commercially available zirconium oxyacetate aqueous solution (manufactured by Daiichi Kigenso Kagaku Kogyo Co., Ltd.; concentration in terms of zirconium oxide (ZrO₂): 20.15 % by mass; and acetic acid concentration: 12.8% by mass) were added to prepare 279 g of a mixed aqueous solution having an Y/(Y+Zr) atomic ratio of 0.33, a COOH group/(Y+Zr) molar ratio of 1.8, a solid content (total mass of yttrium acetate and zirconium acetate in terms of oxides (Y₂O₃+ZrO₂)) concentration of 3.0% by mass, a pH of 5.0, and an electric conductivity of 5.09 mS/cm. The mixed aqueous solution was charged into a 300 ml SUS 316 autoclave vessel and was subjected to the hydrothermal treatment at 180°C for 6 hours. The internal pressure of the autoclave vessel was 0.82 MPa. The obtained aqueous sol had a pH of 4.0, an electric conductivity of 2.79 mS/cm, and a particle diameter measured by a dynamic light scattering method (measured by an N4 plus apparatus) of 12 nm. The colloidal solution was concentrated under reduced pressure using an evaporator to adjust the solid content concentration of the colloidal solution to 5.0% by mass and was subjected to the measurement of the light transmittance at a wavelength of 550 nm and in an optical path length of 10 mm using a spectrophotometric colorimeter TC- 1899 MK. As the result of the measurement the light transmittance of the colloidal solution was 92%. Next, the aqueous sol concentrated to a solid content concentration of 5.0% by mass was washed with pure water using an ultrafiltration membrane to obtain 130 g of an aqueous sol having a pH of 5.4, an electric conductivity of 0.275 mS/cm, and a solid content concentration of 5.0% by mass. The aqueous sol having a solid content concentration of 5.0% by mass had a light transmittance at a wavelength of 550 nm and in an optical path length of 10 mm of 96%, When colloidal particles contained in the aqueous sol were observed under a transmission electron microscope, the colloidal particle was a cubic particle having a maximum value of the primary particle diameter of 6 nm and an average value of the primary particle diameter of 4 nm. The particle diameter measured by a dynamic light scattering method (measured by an N4 plus apparatus) of the aqueous sol was 10 nm. The aqueous sol was dried at 120°C and was subjected to a powder X-ray diffraction measurement to be found to have, at diffraction angles 2θ= 30.0°, 50.2°, and 59.5°, main peaks that agreed with characteristic peaks of tetragonal- or cubic-system yttrium oxide-stabilized zirconium oxide described in the ASTM card 30-1468. The X-ray crystallite thereof was 9.0 nm. Further, colloidal particles contained in the aqueous sol were quantitatively analyzed using an X-ray fluorescence apparatus to be found to have a composition in which the Y/(Y+Zr) atomic ratio was 0.19. The aqueous sol concentrated to a solid content concentration of 5.0% by mass by ultrafiltration washing was left stand still at 25°C for one month, and it was found that there was no change in the physical properties and the appearance of the aqueous sol and the aqueous sol was stable.

Example 5 To 242.9 g of pure water, 14.8 g of a commercially available yttrium acetate powder (manufactured by Aldrich Corporation; concentration in terms of yttrium oxide (Y₂O₃): 35.5% by mass; and acetic acid concentration: 54.0% by mass) and 21.3 g of a commercially available zirconium, oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added to prepare 279 g of a mixed aqueous solution having an Y/(Y+Zr) atomic ratio of 0.57, a COOH group/(Y+Zr) molar ratio of 2.2, a solid content (total mass of yttrium acetate and zirconium acetate in terms of oxides (Y₂O₃+ZrO₂)) concentration of 3.4% by mass, a pH of 5.1, and an electric conductivity of 7.00 mS/cm. The mixed aqueous solution was charged into a 300 ml SUS 316 autoclave vessel and was subjected to the hydrothermal treatment at 230°C for 6 hours. The internal pressure of the autoclave vessel was 2.7 MPa. The obtained aqueous sol had a pH of 4.2 and an electric conductivity of 5.31 mS/cm. The aqueous sol was concentrated under reduced pressure using an evaporator to adjust the solid content concentration of the aqueous sol to 5.0% by mass and was subjected to the measurement of the light transmittance at a wavelength of 550 nm and in an optical path length of 10 mm using a spectrophotometric colorimeter TC-1899 MK. As the result of the measurement, the light transmittance of the aqueous sol was 93%. Next, the aqueous sol concentrated to a solid content concentration of 5.0% by mass was washed with pure water using an ultrafiltration membrane to obtain 112 g of an aqueous sol having a pH of 5.8, an electric conductivity of 0.354 mS/cm, and a solid content concentration of 5.0% by mass. The aqueous sol having a solid content concentration of 5.0% by mass had a light transmittance at a wavelength of 550 nm and in an optical path length of 10 mm of 96%. When colloidal particles contained in the aqueous sol were observed under a transmission electron microscope, the colloidal particle was a cubic particle having a maximum value of the primary particle diameter of 5 nm and an average value of the primary particle diameter of 3 nm. The particle diameter measured by a dynamic light scattering method (measured by an N4 plus apparatus) of the aqueous sol was 9 nm. The aqueous sol was dried at 120°C and was subjected to a powder X-ray diffraction measurement to be found to have, at diffraction angles 2θ= 30.0°, 50.2°, and 59.5°, main peaks that agreed with characteristic peaks of tetragonal- or cubic-system yttrium oxide-stabilized zirconium oxide described in the ASTM card 30-1468. The X-ray crystallite thereof was 5.5 nm. Further, colloidal particles contained in the aqueous sol were quantitatively analyzed using an X-ray fluorescence apparatus to be found to have a composition in which the Y/(Y+Zr) atomic ratio was 0.22. The aqueous sol concentrated to a solid content concentration of 5.0% by mass by ultrafiltration washing was left stand still at 25°C for one month, and it was found that there was no change in the physical properties and the appearance of the aqueous sol and the aqueous sol was stable.

Comparative Example 1 To 240.2 g of pure water, 38.8 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) was added to prepare 279 g of a mixed aqueous solution having a COOH group/Zr molar ratio of 1.3, a solid content (in terms of ZrO₂) concentration of 2.8% by mass, a pH of 4.4, and an electric conductivity of 0.64 mS/cm. The mixed aqueous solution was charged into a 300 ml SUS 316 autoclave vessel and was subjected to the hydrothermal treatment at 180°C for 6 hours. The internal pressure of the autoclave vessel was 0.82 MPa. The obtained aqueous sol exhibited a white color and had a pH of 3.1 and an electric conductivity of 0.85 mS/cm. The aqueous sol was washed with pure water using an ultrafiltration membrane to obtain 137 g of an aqueous sol having a pH of 4.4, an electric conductivity of 0.061 mS/cm, and a solid content concentration of 5.0% by mass. When colloidal particles contained in the aqueous sol were observed under a transmission electron microscope, as the primary particle, besides cubic particles of 15 nm, spindle-shaped particles having a minor axis of 20 nm and a major axis of 40 nm were mixed. The particle diameter measured by a dynamic light scattering method (measured by an N4 plus apparatus) of the aqueous sol was 71 nm. The aqueous sol was dried at 120°C and was subjected to a powder X-ray diffraction measurement to be found to have 6 main peaks, and among them, 3 main peaks at diffraction angles 2θ= 30.0°, 50.2°, and 59.5° agreed with characteristic peaks of tetragonal- or cubic-system yttrium oxide-stabilized zirconium oxide described in the ASTM card 30-1468. The other 3 main peaks at diffraction angles 2θ = 28.2°, 31.5°, and 49.9° agreed with characteristic peaks of monoclinic-system zirconium oxide described in the ASTM card 36-420. Therefore, the aqueous sol is of a mixed phase of tetragonal- or cubic-system yttrium oxide-stabilized zirconium oxide and monoclinic-system zirconium oxide. The aqueous sol having a solid content concentration of 5.0% by mass had a light transmittance at a wavelength of 550 nm and in an optical path length of 10 mm of such low as 21%, and the aqueous sol had poor transparency.

Comparative Example 2 To 244.2 g of pure water, 1.1 g of a commercially available yttrium acetate powder (manufactured by Aldrich Corporation;; concentration in terms of yttrium oxide (Y₂O₃): 35.5% by mass; and acetic acid concentration: 54.0% by mass) and 33.7 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added to prepare 279 g of a mixed aqueous solution having an Y/(Y+Zr) atomic ratio of 0.06, a COOH group/(Y+Zr) molar ratio of 1.4, a solid content (total mass of yttrium acetate and zirconium acetate in terms of oxides (Y₂O₃+ZrO₂)) concentration of 2,6% by mass, a pH of 4.6, and an electric conductivity of 1.81 mS/cm. The mixed aqueous solution was charged into a 300 ml SUS 316 autoclave vessel and was subjected to the hydrothermal treatment at 180°C for 6 hours. The internal pressure of the autoclave vessel was 0.82 MPa. The obtained aqueous sol exhibited a white color and had a pH of 3.1 and an electric conductivity of 0.82 mS/cm. The aqueous sol was washed with pure water using an ultrafiltration membrane to obtain 125 g of an aqueous sol having a pH of 5.0, an electric conductivity of 0.081 mS/cm, and a solid content concentration of 5.0% by mass. When colloidal particles contained in the aqueous sol were observed under a transmission electron microscope, as the primary particle, cubic particles of 15 nm and spindle-shaped particles having a minor axis of 20 nm and a major axis of 40 nm were mixed. The particle diameter measured by a dynamic light scattering method (measured by an N4 plus apparatus) of the aqueous sol was 36 nm. The aqueous sol was dried at 120°C and was subjected to a powder X-ray diffraction measurement to be found to have 6 main peaks, and among them, 3 main peaks at diffraction angles 2θ= 30.0°, 50.2°, and 59.5° agreed with characteristic peaks of tetragonal- or cubic-system yttrium oxide-stabilized zirconium oxide described in the ASTM card 30-1468. The other 3 main peaks at diffraction angles 2θ= 28.2°, 31.5°, and 49.9° agreed with characteristic peaks of monoclinic-system zirconium oxide described in the ASTM card 36-420. Therefore, the aqueous sol is of a mixed phase of tetragonal- or cubic-system yttrium oxide-stabilized zirconium oxide and monoclinic-system zirconium oxide. The aqueous sol having a solid content concentration, of 5.0% by mass had a light transmittance at a wavelength of 550 nm and in an optical path length of 10 mm of such low as 38%, and the aqueous sol had poor transparency.

Comparative Example 3 To 244.7 g of pure water, 19.9 g of a commercially available yttrium acetate powder (manufactured by Aldrich Corporation; concentration in terms of yttrium oxide (Y₂O₃): 35.5% by mass; and acetic acid concentration: 54.0% by mass) and 14.4 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added to prepare 279 g of a mixed aqueous solution having an Y/(Y+Zr) atomic ratio of 0.73, a COOH group/(Y+Zr) molar ratio of 2.4, a solid content (total mass of yttrium acetate and zirconium acetate in terms of oxides (Y₂O₃+ZrO₂)) concentration of 2.7% by mass, a pH of 5.2, and an electric conductivity of 7.68 mS/cm. The mixed aqueous solution was charged into a 300 ml SUS 316 autoclave vessel and was subjected to the hydrothermal treatment at 230°C for 6 hours. The internal pressure of the autoclave vessel was 2.7 MPa. In the obtained aqueous sol, besides a translucent colloidal solution, a small amount of a white precipitate was mixed. When colloidal particles contained in the aqueous sol were observed under a transmission electron microscope, cubic particles having an average value of the primary particle diameter of 2 nm and secondary aggregates having a size of around 50 to 300 nm and formed by an aggregation of primary particles were observed over the whole vision. The particle diameter of the aqueous sol measured by a dynamic light scattering method (measured by an N4 plus apparatus) was such large as 417 nm. The aqueous sol was dried at 120°C and was subjected to a powder X-ray diffraction measurement to be found to have, at diffraction angles 2θ= 30.0°, 50.2°, and 59.5°, small peaks that agreed with characteristic peaks of tetragonal- or cubic-system yttrium oxide-stabilized zirconium oxide described in the ASTM card 30-1468.

In Table 1, the results of Examples 1 to 5 and Comparative Examples 1 to 3 are shown.

**[Table 1]**

| | COOH group/ (Y+Zr) (molar ratio) | Y/(Y + Zr) (atomic ratio) | Mixed aqueous solution pH | Temperature for hydrothermal treatment (° C.) | Time for hydrothermal treatment (h) | Transmission electron microscope observation | Particle diameter by dynamic light scattering method (nm) | Light transmittance (*1) (%) |
|---|---|---|---|---|---|---|---|---|
| Example 1 | 1.5 | 0.11 | 4.7 | 180 | 6 | 10 nm, cubic particles | 25 | 76 |
| Example 2 | 1.5 | 0.15 | 4.8 | 180 | 6 | 8 nm, cubic particles | 24 | 80 |
| Example 3 | 1.6 | 0.20 | 4.8 | 180 | 6 | 6 nm, cubic particles | 16 | 87 |
| Example 4 | 1.8 | 0.33 | 5.0 | 180 | 6 | 4 nm, cubic particles | 10 | 96 |
| Example 5 | 2.2 | 0.57 | 5.1 | 230 | 6 | 3 nm, cubic particles | 9 | 96 |
| Comparative Example 1 | 1.3 | 0.00 | 4.4 | 180 | 6 | 15 nm, cubic particles + 20 nm x 40 nm spindle-shaped particles | 71 | 21 |
| Comparative Example 2 | 1.4 | 0.06 | 4.6 | 180 | 6 | 15 nm, cubic particles + 20 nm x 40 nm spindle-shaped particles | 36 | 38 |
| Comparative Example 3 | 2.4 | 0.73 | 5.2 | 230 | 6 | 50 to 300 nm secondary aggregates of 2 nm, cubic particles | 417 | — |

| | | | | | | | | |
|---|---|---|---|---|---|---|---|---|
| *1: Light transmittance at a wavelength of 550 nm and in an optical path length of 10 mm of the aqueous sol having a solid content concentration of 5% by mass | | | | | | | | |

From example 1 to 5 in table 1, that when the Y/(Y+Zr) atomic ratio of a mixed aqueous solution of atrium acetate and zirconium oxyacetate it was indicated before the hydrothermal treatment is 0.10 or more and 0.60 or less, the obtained aqueous sol has a small particle diameter, causes little secondary aggregation, and has high transparency. On the other hand, from Comparative Example 1 or 2, it was indicated that when the Y/(Y+Zr) atomic ratio of a mixed aqueous solution of yttrium acetate and zirconium oxyacetate before the hydrothermal treatment is less than 0.10, spindle-shaped monoclinic-system zirconium oxide particles having a minor axis of 20 nm and a major axis of 40 nm are generated, so that the obtained aqueous sol has low transparency.

From Comparative Example 3 in Table 1, it was indicated that when the Y/(Y+Zr) atomic ratio of a mixed aqueous solution of yttrium acetate and zirconium oxyacetate before the hydrothermal treatment is more than 0.60, secondary aggregates are generated, so that the obtained aqueous sol has low transparency.

Example 6 To 244.1 g of pure water, 2.9 g of a commercially available yttrium acetate powder (manufactured by Aldrich Corporation, concentration in terms of yttrium oxide (Y₂O₃): 35.5% by mass; and acetic acid concentration: 54.0% by mass) and 32.0 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added to prepare 279 g of a mixed aqueous solution having an Y/(Y+Zr) atomic ratio of 0.15, a COOH group/(Y+Zr) molar ratio of 1.5, a solid content (total mass of yttrium acetate and zirconium acetate in terms of oxides (Y₂O₃+ZrO₂)) concentration of 2.7% by mass, a pH of 4.8, and an electric conductivity of 3.05 mS/cm. The mixed aqueous solution was charged into a 300 ml SUS 316 autoclave vessel and was subjected to the hydrothermal treatment at 180°C for 21 hours. The internal pressure of the autoclave vessel was 0.82 MPa. The obtained aqueous sol had a pH of 3.6 and an electric conductivity of 0.95 mS/cm. The aqueous sol was concentrated under reduced pressure using an evaporator to adjust the solid content concentration of the aqueous sol to 5.0% by mass and was subjected to the measurement of the light transmittance at a wavelength of 550 nm and in an optical path length of 10 mm using a spectrophotometric colorimeter TC-1899 MK. As the result of the measurement, the light transmittance of the aqueous sol was 74%. Next, the aqueous sol concentrated to a solid content concentration of 5.0% by mass was washed with pure water using an ultrafiltration membrane to obtain an aqueous sol having a pH of 4.9, an electric conductivity of 0.150 mS/cm, and a solid content concentration of 5.0% by mass. When colloidal particles contained in the aqueous sol were observed under a transmission electron microscope, the colloidal particle was a cubic particle having a maximum value of the primary particle diameter of 10 nm and an average value of the primary particle diameter of 8 nm. The particle diameter measured by a dynamic light scattering method (measured by an N4 plus apparatus) was 21 nm. The aqueous sol was dried at 120°C and was subjected to a powder X-ray diffraction measurement to be found to have, at diffraction angles 2θ= 30.0°, 50.2°, and 59.5°, main peaks that agreed with characteristic peaks of tetragonal- or cubic-system yttrium oxide-stabilized zirconium oxide described in the ASTM card 30-1468. The X-ray crystallite thereof was 10.8 nm. The aqueous sol having a solid content concentration of 5.0% by mass had a light transmittance at a wavelength of 550 nm and in an optical path length of 10 mm of 77%. The aqueous sol concentrated to a solid content concentration of 5.0% by mass by an evaporator was left stand still at 25°C for one month, and it was found that there was no change in the physical properties and the appearance of the aqueous sol and the aqueous sol was stable.

Example 7 To 244.1 g of pure water, 2.9 g of a commercially available yttrium acetate powder (manufactured by Aldrich Corporation; concentration in terms of yttrium oxide (Y₂O₃): 35.5% by mass; and acetic acid concentration: 54.0% by mass) and 32.0 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added to prepare 279 g of a mixed aqueous solution having an Y/(Y+Zr) atomic ratio of 0.15, a COOH group/(Y+Zr) molar ratio of 1.5, a solid content (total mass of yttrium acetate and zirconium acetate in terms of oxides (Y₂O₃+ZrO₂)) concentration, of 2.7% by mass, a pH of 4.8, and an electric conductivity of 3.05 mS/cm. The mixed aqueous solution was charged into a 300 ml SUS 316 autoclave vessel and was subjected to the hydrothermal treatment at 200°C for 6 hours. The internal pressure of the autoclave vessel was 1.3 MPa. The obtained aqueous sol had a pH of 3.2 and an electric conductivity of 0.92 mS/cm. The aqueous sol was concentrated under reduced pressure using an evaporator to adjust the solid content concentration of the aqueous sol to 5.0% by mass and was subjected to the measurement of the light transmittance at a wavelength of 550 nm and in an optical path length of 10 mm using a spectrophotometric colorimeter TC-1899 MK. As the result of the measurement, the light transmittance of the aqueous sol was 77%. Next, the aqueous sol concentrated to a solid content concentration of 5.0% by mass was washed with pure water using an ultrafiltration membrane to obtain an aqueous sol having a pH of 4.9, an electric conductivity of 0.145 mS/cm, and a solid content concentration of 5.0% by mass. When colloidal particles contained in the aqueous sol were observed under a transmission electron microscope, the colloidal particle was a cubic particle having a maximum value of the primary particle diameter of 10 nm and an average value of the primary particle diameter of 8 nm. The particle diameter measured by a dynamic light scattering method (measured by an N4 plus apparatus) was 29 nm. The aqueous sol was dried at 120°C and was subjected to a powder X-ray diffraction measurement to be found to have, at diffraction angles 2θ = 30.0°, 50.2°, and 59.5°, main peaks that agreed with characteristic peaks of tetragonal- or cubic-system yttrium oxide-stabilized zirconium oxide described in the ASTM card 30-1468. The X-ray crystallite thereof was 9.3 nm. The aqueous sol having a solid content concentration of 5.0% by mass had a light transmittance at a wavelength of 550 nm and in an optical path length of 10 mm of 80%. The aqueous sol concentrated to a solid content concentration of 5.0% by mass by an evaporator was left stand still at 25°C for one month, and it was found that there was no change in the physical properties and the appearance of the aqueous sol and the aqueous sol was stable.

Example 8 To 244.1 g of pure water, 2.9 g of a commercially available yttrium acetate powder (manufactured by Aldrich Corporation; concentration in terms of yttrium oxide (Y₂O₃): 35.5% by mass; and acetic acid concentration: 54.0% by mass) and 32.0 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added, and to the resultant mixture, 9 ml of an anion-exchange resin TRA-410 (manufactured by Organo Corporation) was added, followed by stirring the resultant mixture for I hour 30 minutes and then removing the anion-exchange resin to prepare 279 g of a mixed aqueous solution having an Y/(Y+Zr) atomic ratio of 0.15, a COOH group/(Y+Zr) molar ratio of 1.3, a solid content (total mass of yttrium acetate and zirconium acetate in terms of oxides (Y₂O₃+ZrO₂)) concentration of 2.7% by mass, a pH of 5.0, and an electric conductivity of 2.66 mS/cm. The mixed aqueous solution was charged into a 300 ml SUS 316 autoclave vessel and was subjected to the hydrothermal treatment at 180°C for 6 hours. The internal pressure of the autoclave vessel was 0.82 MPa. The obtained aqueous sol had a pH of 3,5 and an electric conductivity of 0.84 mS/cm. The aqueous sol was concentrated under reduced pressure using an evaporator to adjust the solid content concentration of the aqueous sol to 5.0% by mass and was subjected to the measurement of the light transmittance at a wavelength of 550 nm and in an optical path length of 10 mm using a spectrophotometric colorimeter TC-1899 MK. As the result of the measurement, the light transmittance of the aqueous sol was 72%. Next, the aqueous sol concentrated to a solid content concentration of 5.0% by mass was washed with pure water using an ultrafiltration membrane to obtain 130 g of an aqueous sol having a pH of 5.1, an electric conductivity of 0.135 mS/cm, and a solid content concentration of 5.0% by mass. When colloidal particles contained in the aqueous sol were observed under a transmission electron microscope, the colloidal particle was a cubic particle having a maximum value of the primary particle diameter of 10 nm and an average value of the primary particle diameter of 8 nm. The particle diameter measured by a dynamic light scattering method (measured by an N4 plus apparatus) was 23 nm. The aqueous sol was dried at 120°C and was subjected to a powder X-ray diffraction measurement to be found to have, at diffraction angles 2θ= 30.0°, 50.2°, and 59.5°, main peaks that agreed with characteristic peaks of tetragonal- or cubic-system yttrium oxide-stabilized zirconium oxide described in the ASTM card 30-1468. The X-ray crystallite thereof was 13.0 nm. Further, colloidal particles contained in the aqueous sol were quantitatively analyzed using an X-ray fluorescence apparatus to be found to have a composition in which the Y/(Y+Zr) atomic ratio was 0.11. The aqueous sol having a solid content concentration of 5.0% by mass had a light transmittance at a wavelength of 550 nm and in an optical path length of 10 mm of 75%. The aqueous sol concentrated to a solid content concentration of 5.0% by mass by an evaporator was left stand still at 25°C for one month, and it was found that there was no change in the physical properties and the appearance of the aqueous sol and the aqueous sol was stable.

Example 9 In an aqueous solution in which 22.0 g of 99.7% by mass acetic acid was diluted with 68 g of pure water, 74.4 g of a commercially available zirconium oxycarbonate powder (manufactured by Advanced Material Resources Ltd.; concentration in terms of zirconium oxide (ZrO₂): 40.3% by mass) was dissolved to prepare 159.5 g of a zirconium oxyacetate aqueous solution having a concentration in terms of zirconium oxide (ZrO₂) of 18.2% by mass and an acetic acid concentration of 13.3% by mass. To 241.8 g of pure water, 2.9 g of a commercially available yttrium acetate powder (manufactured by Aldrich Corporation; concentration in terms of yttrium oxide (Y₂O₃): 35.5% by mass; and acetic acid concentration: 54.0% by mass) and 34,3 g of the above prepared zirconium oxyacetate aqueous solution (concentration in terms of zirconium oxide (ZrO₂): 18.8% by mass; and acetic acid concentration: 13.3% by mass) were added to prepare 279 g of a mixed aqueous solution having an Y/(Y+Zr) atomic ratio of 0.15, a COOH group/(Y+Zr) molar ratio of 1.9, a solid content (total mass of yttrium acetate and zirconium acetate in terms of oxides (Y₂O₃+ZrO₂)) concentration of 2.7% by mass, a pH of 4.7, and an electric conductivity of 3.17 mS/cm. The mixed aqueous solution was charged into a 300 ml SUS 316 autoclave vessel and was subjected to the hydrothermal treatment at 180°C for 6 hours. The internal pressure of the autoclave vessel was 0.82 MPa. The obtained aqueous sol had a pH of 3.4 and an electric conductivity of 1.15 mS/cm. The aqueous sol was concentrated under reduced pressure using an evaporator to adjust the solid content concentration of the aqueous sol to 5.0% by mass and was subjected to the measurement of the light transmittance at a wavelength of 550 nm and in an optical path length of 10 mm using a spectrophotometric colorimeter TC-1899 MK. As the result of the measurement, the light transmittance of the aqueous sol was 80%. Next, the aqueous sol concentrated to a solid content concentration of 5.0% by mass was washed with pure water using an ultrafiltration membrane to obtain 132 g of an aqueous sol having a pH of 4.7, an electric conductivity of 0.200 mS/cm, and a solid content concentration of 5.0% by mass. When colloidal particles contained in the aqueous sol were observed under a transmission electron microscope, the colloidal particle was a cubic particle having a maximum value of the primary particle diameter of 10 nm and an average value of the primary particle diameter of 8 nm. The particle diameter measured by a dynamic light scattering method (measured by an N4 plus apparatus) was 19 nm. The aqueous sol was dried at 120°C and was subjected to a powder X-ray diffraction measurement to be found to have, at diffraction angles 2θ= 30.0°, 50.2°, and 59.5°, main peaks that agreed with characteristic peaks of tetragonal- or cubic-system yttrium oxide-stabilized zirconium oxide described in the ASTM card 30-1468. The X-ray crystallite thereof was 9.3 nm. Further, colloidal particles contained in the aqueous sol were quantitatively analyzed using an X-ray fluorescence apparatus to be found to have a composition in which the Y/(Y+Zr) atomic ratio was 0.11. The aqueous sol having a solid content concentration of 5.0% by mass had a light transmittance at a wavelength of 550 nm and in an optical path length of 10 mm of 83%. The aqueous sol concentrated to a solid content concentration of 5.0% by mass by an evaporator was left stand still at 25°C for one month, and it was found that there was no change in the physical properties and the appearance of the aqueous sol and the aqueous sol was stable.

Example 10 To 1,750 g of pure water, 28.7 g of a commercially available yttrium acetate powder (manufactured by Aldrich Corporation; concentration in terms of yttrium oxide (Y₂O₃): 35.7% by mass; and acetic acid concentration: 54.0% by mass) and 221.3 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added to prepare 2,000 g of a mixed aqueous solution having an Y/(Y+Zr) atomic ratio of 0.20, a COOH group/(Y+Zr) molar ratio of 1.5, a solid content (total mass of yttrium acetate and zirconium acetate in terms of oxides (Y₂O₃+ZrO₂)) concentration of 2.7% by mass, a pH of 5.0, and an electric conductivity of 4.60 mS/cm. The mixed aqueous solution was charged into a 3-liter SUS 316 autoclave vessel and was subjected to the hydrothermal treatment at 180°C for 6 hours while stirring the solution with an anchor-shaped stirring propeller. The internal pressure of the autoclave vessel was 0.82 MPa. The obtained aqueous sol had a pH of 4.0, an electric conductivity of 2.85 mS/cm, and a particle diameter measured by a dynamic light scattering method (measured by an N4 plus apparatus) of 13 nm. The colloidal solution was concentrated under reduced pressure using an evaporator to adjust the solid content concentration of the colloidal solution to 5.0% by mass and was subjected to the measurement of the light transmittance at a wavelength of 550 nm and in an optical path length of 10 mm using a spectrophotometric colorimeter TC-1899 MK. As the result of the measurement the light transmittance of the colloidal solution was 95%. Next, the aqueous sol concentrated to 5.0% by mass was washed with pure water using an ultrafiltration membrane to obtain 1,020 g of an aqueous sol having a pH of 5.2, an electric conductivity of 0.266 mS/cm, and a solid content of 5.0% by mass. When the aqueous sol was observed under a transmission electron microscope, the colloidal particle was a cubic particle having a maximum value of the primary particle diameter of 8 nm and an average value of the primary particle diameter of 6 nm. The particle diameter measured by a dynamic light scattering method (measured by an N4 plus apparatus) was 8 nm. The aqueous sol was dried at 120°C and was subjected to a powder X-ray diffraction measurement to be found to have, at diffraction angles 2θ= 30.0°, 50.2°, and 59.5°, main peaks that agreed with characteristic peaks of tetragonal- or cubic-system yttrium oxide-stabilized zirconium oxide described in the ASTM card 30-1468. The X-ray crystallite thereof was 8.7 nm. Further, colloidal particles contained in the aqueous sol were quantitatively analyzed using an X-ray fluorescence apparatus to be found to have a composition in which the Y/(Y+Zr) atomic ratio was 0.20. The aqueous sol having a solid content concentration of 5.0% by mass had a light transmittance at a wavelength of 550 nm and in an optical path length of 10 mm of 96%.

600 g of the aqueous sol was charged into a 2-liter plastic bottle, and while stirring the aqueous sol with a disperser, thereto, 108 g of a 5% by mass citric acid aqueous solution was added. Then, the resultant mixture was stirred for 2 hours to prepare a white slurry having a pH of 2.8 and an electric conductivity of 0.979 mS/cm. Next, the white slurry was subjected to filtration and washing with pure water using a Büchner funnel. The obtained wet cake was dispersed in pure water to prepare 800 g of a white slurry having a pH of 3.4, an electric conductivity of 0.112 mS/cm, and a solid content of 3.8% by mass. While stirring the white slurry, thereto, 7.8 g of a 10% by mass isopropylamine aqueous solution was added to obtain an aqueous sol having a pH of 6.6, an electric conductivity of 0.914 mS/cm, and a particle diameter measured by a dynamic light scattering method of 11 nm. While stirring the sol, thereto, 10.4 g of a 5% by mass citric acid aqueous solution was added, and the resultant mixture was concentrated using an ultrafiltration membrane to obtain 278 g of an aqueous sol of yttrium oxide-stabilized zirconium oxide particles having a particle diameter measured by a dynamic light scattering method of 8 nm, a pH of 4.5, an electric conductivity of 1.45 mS/cm, and a solid content of 10.0% by mass. The light transmittance at a wavelength of 550 nm and in an optical path length of 10 mm of the aqueous sol adjusted with pure water to a solid content concentration of 5.0% by mass was 94%. 278 g of the aqueous sol was charged into a rotary evaporator equipped with a 1-liter eggplant-shaped flask, and thereto, methanol was continuously charged under a reduced pressure of 70 Torr to replace the aqueous medium of the aqueous sol with methanol to obtain 270 g of an yttrium oxide-stabilized zirconium oxide methanol sol. The methanol sol had a solid content of 10.3% by mass, a pH of a solution in which the methanol sol was diluted (mass ratio: 1:1) with pure water of 5.7, and a particle diameter measured by a dynamic light scattering method of 8 nm. A sol prepared by adjusting the methanol sol to a solid content concentration of 5% by mass with methanol had a light transmittance at a wavelength of 550 nm in an optical path length of 10 mm of 94%. When the obtained methanol sol having a solid content of 10.3% by mass was left stand still at 25°C for one month, there was no change in the physical properties and the appearance of the sol, and the sol was stable.

Example 11 To 1,750 g of pure water, 28.7 g of a commercially available yttrium acetate powder (manufactured by Aldrich Corporation; concentration in terms of yttrium oxide (Y₂O₃): 35.7% by mass; and acetic acid concentration: 54.0% by mass) and 221.3 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added to prepare 2,000 g of a mixed aqueous solution having an Y/(Y+Zr) atomic ratio of 0.20, a COOH group/(Y+Zr) molar ratio of 1.5, a solid content (total mass of yttrium acetate and zirconium acetate in terms of oxides (Y₂O₃+ZrO₂)) concentration of 2.7% by mass, a pH of 4.9, and an electric conductivity of 4.71 mS/cm. The mixed aqueous solution was charged into a 3-liter SUS 316 autoclave vessel and was subjected to the hydrothermal treatment at 180°C for 6 hours while stirring the solution with an anchor-shaped stirring propeller. The obtained aqueous sol had a pH of 4.1, an electric conductivity of 2.45 mS/cm, and a particle diameter measured by a dynamic light scattering method (measured by an N4 plus apparatus) of 12 nm. The aqueous sol was concentrated under reduced pressure using an evaporator to adjust the solid content concentration of the aqueous sol to 5.0% by mass and was subjected to the measurement of the light transmittance at a wavelength of 550 nm and in an optical path length of 10 mm using a spectrophotometric colorimeter TC-1899 MK. As the result of the measurement, the light transmittance of the sol was 97%. Next, the aqueous sol concentrated to 5.0% by mass was washed with pure water using an ultrafiltration membrane to obtain 1,020 g of an aqueous sol having a pH of 5.7, an electric conductivity of 0.245 mS/cm, and a solid content of 5.0% by mass. When the aqueous sol was observed under a transmission electron microscope, the colloidal particle was a cubic particle having a maximum value of the primary particle diameter of 8 nm and an average value of the primary particle diameter of 6 nm. The particle diameter measured by a dynamic light scattering method (measured by an N4 plus apparatus) was 10 nm. The aqueous sol was dried at 120°C and was subjected to a powder X-ray diffraction measurement to be found to have, at diffraction angles 2θ= 30.0°, 50.2°, and 59.5°, main peaks that agreed with characteristic peaks of tetragonal- or cubic-system yttrium oxide-stabilized zirconium oxide described in the ASTM card 30-1468. The X-ray crystallite thereof was 8.5 nm. Further, colloidal particles contained in the aqueous sol were quantitatively analyzed using an X-ray fluorescence apparatus to be found to have a composition in which the Y/(Y+Zr) atomic ratio was 0.20. The aqueous sol having a solid content concentration of 5.0% by mass had a light transmittance at a wavelength of 550 nm and in an optical path length of 10 mm of 97%.
940 g of isopropyl alcohol was charged into a 2-liter plastic bottle, and while stirring the alcohol with a magnetic stirrer, thereto, 18.8 g of a 10% by mass dodecylbenzene sulfonic acid aqueous solution and 3.8 g of a 10% by mass acetic acid aqueous solution were added to prepare a solution. Next, while stirring the resultant solution with a magnetic stirrer, thereto, 376 g of the above aqueous sol was added to obtain 1,339 g of an isopropyl alcohol-water solvent mixture sol containing yttrium oxide-stabilized zirconium oxide particles having a particle diameter measured by a dynamic light scattering method of 12 nm, a pH of 4.2, an electric conductivity of 0.050 mS/cm, and a solid content of 1.4% by mass. 1,339 g of the solvent mixture sol was charged into a rotary evaporator equipped with a 1-liter eggplant-shaped flask, and thereto, isopropyl alcohol was continuously charged under a reduced pressure of 70 Torr to replace water in the solvent mixture sol with isopropyl alcohol to obtain 180 g of an yttrium oxide-stabilized zirconium oxide isopropyl alcohol sol. The isopropyl alcohol sol had a solid content of 10.4% by mass, a pH of a solution in which the isopropyl alcohol sol was diluted (mass ratio: 1:1) with pure water of 4.1, and a particle diameter measured by a dynamic light scattering method of 10 nm. A sol prepared by adjusting the isopropyl alcohol sol to a solid content concentration of 5% by mass with isopropyl alcohol had a light transmittance at a wavelength of 550 nm and in an optical path length of 10 mm of 93%. When the obtained isopropyl alcohol sol having a solid content of 10.4% by mass was left stand still at 25°C for one month, there was no change in the physical properties and the appearance of the isopropyl alcohol sol, and the isopropyl alcohol sol was stable.

Comparative Example 4 To 244.1 g of pure water, 2.9 g of a commercially available yttrium acetate powder (manufactured by Aldrich Corporation; concentration in terms of yttrium oxide (Y₂O₃): 35.5% by mass; and acetic acid concentration: 54.0% by mass) and 32.0 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added to prepare 279 g of a mixed aqueous solution having an Y/(Y+Zr) atomic ratio of 0.15, a COOH group/(Y+Zr) molar ratio of 1.5, a solid content (total mass of yttrium acetate and zirconium acetate in terms of oxides (Y₂O₃+ZrO₂)) concentration of 2.7% by mass, a pH of 4.8, and an electric conductivity of 3.05 mS/cm. The mixed aqueous solution was charged into a 300 ml SUS 316 autoclave vessel and was subjected to the hydrothermal treatment at 180°C for 1 hour. The internal pressure of the autoclave vessel was 0.82 MPa. The product after the hydrothermal treatment was a translucent white slurry having a pH of 4.0 and an electric conductivity of 1.65 mS/cm. When particles contained in the slurry were observed under a transmission electron microscope, there were observed 25 to 100 nm ameba-shaped amorphous substances and a cubic particle having a maximum value of the primary particle diameter of 10 nm and an average value of the primary particle diameter of 8 nm. The particle diameter measured by a dynamic light scattering method, (measured by an N4 plus apparatus) of the slurry was 310 nm. The slurry was dried at 120°C and was subjected to a powder X-ray diffraction measurement to be found to have small peaks that agreed with characteristic peaks of tetragonal- or cubic-system yttrium oxide-stabilized zirconium oxide described in the ASTM card 30-1468. The slurry was concentrated under reduced pressure using an evaporator to adjust the solid content concentration of the slurry to 5.0% by mass. The adjusted slurry had a light transmittance at a wavelength of 550 nm and in an optical path length of 10 mm of 1%.

Comparative Example 5 To 244.1 g of pure water, 2.9 g of a commercially available yttrium acetate powder (manufactured by Aldrich Corporation; concentration in terms of yttrium oxide (Y₂O₃): 35.5% by mass; and acetic acid concentration: 54.0% by mass) and 32.0 g of commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added to prepare 279 g of a mixed aqueous solution having an Y/(Y+Zr) atomic ratio of 0.15, a COOH group/(Y+Zr) molar ratio of 1.5, a solid content (total mass of yttrium acetate and zirconium acetate in terms of oxides (Y₂O₃+ZrO₂)) concentration of 2.7% by mass, a pH of 4.8, and an electric conductivity of 3.05 mS/cm. The mixed aqueous solution was charged into a 300 ml SUS 316 autoclave vessel and was subjected to the hydrothermal treatment at 150°C for 21 hours. The internal pressure of the autoclave vessel was 0.44 MPa. The product after the hydrothermal treatment was a translucent white slurry having a pH of 4.3 and an electric conductivity of 2.45 mS/cm. When particles contained in the slurry were observed under a transmission electron microscope, there were observed 25 to 100 nm ameba-shaped amorphous substances. The slurry was dried at 120°C and was subjected to a powder X-ray diffraction measurement, and there appeared no diffraction peak, so that the dried product was indicated to be amorphous. The slurry was concentrated under reduced pressure using an evaporator to adjust the solid content concentration of the slurry to 5.0% by mass. The adjusted slurry had a light transmittance at a wavelength of 550 nm and in an optical path length of 10 mm of 2%.

Comparative Example 6 To 244.1 g of pure water, 2.9 g of a commercially available yttrium acetate powder (manufactured by Aldrich Corporation; concentration in terms of yttrium oxide (Y₂O₃): 35.5% by mass; and acetic acid concentration: 54.0% by mass) and 32.0 g of a commercially available zirconium oxyacetate aqueous solution (manufactured by Daiichi Kigenso Kagaku Kogyo Co., Ltd.; concentration in terms of zirconium oxide (ZrO₂) : 20.15% by mass; and acetic acid concentration: 12.8% by mass) were added to prepare 279 g of a mixed aqueous solution having an Y/(Y+Zr) atomic ratio of 0.15, a COOH group/(Y+Zr) molar ratio of 1.5, a solid content (total mass of yttrium acetate and zirconium acetate in terms of oxides (Y₂O₃+ZrO₂)) concentration of 2.7% by mass, a pH of 4.8, and an electric conductivity of 3.05 mS/cm. The mixed aqueous solution was charged into a 300 ml SUS 316 autoclave vessel and was subjected to the hydrothermal treatment at 300°C for 6 hours. The internal pressure of the autoclave vessel was 9.4 MPa. The obtained aqueous sol exhibited a light brown color and had a pH of 3.1 and an electric conductivity of 0.99 mS/cm. In the SUS 316 autoclave vessel, corrosion was observed. The aqueous sol was washed with pure water using an ultrafiltration membrane to obtain an aqueous sol having a pH of 3.1, an electric conductivity of 0.99 mS/cm, and a solid content concentration of 5.0% by mass. When colloidal particles contained in the aqueous sol were observed under a transmission electron microscope, the colloidal particle was a cubic particle having a maximum value of the primary particle diameter of 10 nm and an average value of the primary particle diameter of 8 nm. The particle diameter measured by a dynamic light scattering method (measured by an N4 plus apparatus) was 64 nm. The aqueous sol was dried at 120°C and was subjected to a powder X-ray diffraction measurement to be found to have, at diffraction angles 2θ= 30.0°, 50.2°, and 59.5°, main peaks that agreed with characteristic peaks of tetragonal- or cubic-system yttrium oxide-stabilized zirconium oxide described in the ASTM card 30-1468. The X-ray crystallite thereof was 8.1 nm. The aqueous sol having a solid content concentration of 5.0% by mass had a light transmittance at a wavelength of 550 nm and in an optical path length of 10 mm of 53%.

Comparative Example 7 To 244.1 g of pure water, 2.9 g of a commercially available yttrium acetate powder (manufactured by Aldrich Corporation; concentration in terms of yttrium oxide (Y₂O₃): 35.5% by mass; and acetic acid concentration: 54.0% by mass) and 32.0 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added, and to the resultant mixture, 19 ml of an anion-exchange resin IRA-410 (manufactured by organo Corporation) was added, followed by stirring the resultant mixture for 1 hour 30 minutes and then removing the anion-exchange resin to prepare 279 g of a mixed aqueous solution having an Y/(Y+Zr) atomic ratio of 0.15, a COOH groupl(Y+7r) molar ratio of 1.0, a solid content (total mass of yttrium acetate and zirconium acetate in terms of oxides (Y₂O₃+ZrO₂)) concentration of 2.7% by mass, a pH of 5.5, and an electric conductivity of 2.07 mS/cm. The mixed aqueous solution was charged into a 300 ml SUS 316 autoclave vessel and was subjected to the hydrothermal treatment at 180°C for 6 hours. The internal pressure of the autoclave vessel was 0.82 MPa. The obtained aqueous sol had a pH of 3.6 and an electric conductivity of 0.73 mS/cm. The aqueous sol was washed with pure water using an ultrafiltration membrane to obtain 130 g of an aqueous sol having a pH of 5.2, an electric conductivity of 0.130 mS/cm, and a solid content concentration of 5.0% by mass. When colloidal particles contained in the aqueous sol were observed under a transmission electron microscope, the colloidal particle was a cubic particle having a maximum value of the primary particle diameter of 10 nm and an average value of the primary particle diameter of 8 nm. The particle diameter measured by a dynamic light scattering method (measured by an N4 plus apparatus) was 69 nm. The aqueous sol was dried at 120°C and was subjected to a powder X-ray diffraction measurement to be found to have, at diffraction angles 2θ = 30.0°, 50.2°, and 59.5°, main peaks that agreed with characteristic peaks of tetragonal- or cubic-system yttrium oxide-stabilized zirconium oxide described in the ASTM card 30-1468. The X-ray crystallite thereof was 10.3 nm. Further, colloidal particles contained in the aqueous sol were quantitatively analyzed using an X-ray fluorescence apparatus to be found to have a composition in which the Y/(Y+Zr) atomic ratio was 0.11. The above aqueous sol having a solid content concentration of 5.0% by mass had a light transmittance at a wavelength of 550 nm and in an optical path length of 10 mm of 38%. The above mixed aqueous solution gelated after one day and was an unstable aqueous solution.

Comparative Example 8 60.0g of a commercially available zirconium oxycarbonate powder (manufactured by Advanced Material Resources Ltd.; concentration in terms of zirconium oxide (ZrO₂): 40.3% by mass) was dissolved in an aqueous solution in which 29.6 g of 99.7% by mass acetic acid was diluted with 49 g of pure water to prepare 145.7 g of a zirconium oxyacetate aqueous solution having a concentration in terms of zirconium oxide (ZrO₂) of 16.6% by mass and an acetic acid concentration of 20.3% by mass. To 237.4 g of pure water, 2.9 g of a commercially available yttrium acetate powder (manufactured by Aldrich Corporation; concentration in terms of yttrium oxide (Y₂O₃): 35.5% by mass; and acetic acid concentration: 54.0% by mass) and 38.8 g of the above prepared zirconium oxyacetate aqueous solution (concentration in terms of zirconium oxide (ZrO₂); 16.6% by mass; and acetic acid concentration: 20.3% by mass) were added to prepare 279 g of a mixed aqueous solution having an Y/(Y+Zr) atomic ratio of 0.15, a COOH group/(Y+Zr) molar ratio of 2.6, a solid content (total mass of yttrium acetate and zirconium acetate in terms of oxides (Y₂O₃+ZrO₂)) concentration of 2.7% by mass, a pH of 4.2, and an electric conductivity of 3.18 mS/cm. The mixed aqueous solution was charged into a 300 ml SUS 316 autoclave vessel and was subjected to the hydrothermal treatment at 180°C for 6 hours. The internal pressure of the autoclave vessel was 0.82 MPa. The obtained aqueous sol had a pH of 3.4 and an electric conductivity of 1.44 mS/cm. The aqueous sol was washed with pure water using an ultrafiltration membrane to obtain 135 g of an aqueous sol having a pH of 4.7, an electric conductivity of 0.210 mS/cm, and a solid content concentration of 5.0% by mass. When colloidal particles contained in the aqueous sol were observed under a transmission electron microscope, as the primary particle, cubic particles of 15 nm and spindle-shaped particles having a minor axis of 20 nm and a major axis of 40 nm were mixed, The particle diameter measured by a dynamic light scattering method (measured by an N4 plus apparatus) was 29 nm. The aqueous sol was dried at 120°C and was subjected to a powder X-ray diffraction measurement to be found to have 6 main peaks, and among them, 3 main peaks at diffraction angles 2θ = 30.0°, 50.2°, and 59.5° agreed with characteristic peaks of tetragonal- or cubic-system yttrium oxide-stabilized zirconium oxide described in the ASTM card 30-1468. The other 3 main peaks at diffraction angles 2θ= 28.2°, 31.5°, and 49.9° agreed with characteristic peaks of monoclinic-system zirconium oxide described in the ASTM card 36-420. Therefore, the obtained aqueous sol is of a mixed phase of tetragonal- or cubic-system yttrium oxide-stabilized zirconium oxide and monoclinic-system zirconium oxide. The aqueous sol having a solid content concentration of 5.0% by mass had a light transmittance at a wavelength of 550 nm and in an optical path length of 10 mm of 55%.

Comparative Example 9 A commercially available zirconium oxycarbonate, powder (manufactured by Advanced Material Resources Ltd.; concentration in terms of zirconium oxide (ZrO₂): 40.3% by mass) was dissolved in 60% by mass concentrated nitric acid to prepare a zirconium nitrate aqueous solution having a concentration in terms of zirconium oxide (ZrO₂) of 24.5% by mass. Next, to 236.7 g of pure water, 16.9 g of a commercially available yttrium nitrate aqueous solution (manufactured by Nippon Yttrium Co., Ltd. ; concentration in terms of yttrium oxide (Y₂03) 8.5% by mass) and 25.4 g of the above prepared zirconium nitrate aqueous solution were added to prepare 279 g of a mixed aqueous solution having an Y/(Y+Zr) atomic ratio of 0.20, a total mass of a solid content (total mass of yttrium nitrate and zirconium nitrate in terms of oxides (Y₂O₃+ZrO₂)) concentration of 2.7% by mass, a pH of 1.4, and an electric conductivity of 47.2 mS/cm. The mixed aqueous solution was charged into a 300 ml SUS 316 autoclave vessel and was subjected to the hydrothermal treatment at 180°C for 6 hours. The internal pressure of the autoclave vessel was 0.82 MPa. The obtained aqueous sol had a pH of 0.8 and an electric conductivity of 122.1 mS/cm. The aqueous sol was washed with pure water using an ultrafiltration membrane to obtain a white colloidal solution having a pH of 3.9, an electric conductivity of 0.479 mS/cm, and a solid content concentration of 5.0% by mass. When the white colloidal solution was observed under a transmission electron microscope, spindle-shaped particles having a minor axis of 20 nm and a major axis of 40 nm as the primary particle and 40 to 100 nm ameba-shaped particles were mixed. The particle diameter measured by a dynamic light scattering method (measured by an N4 plus apparatus) was 100 nm. The aqueous sol after washing was dried at 120°C and was subjected to a powder X-ray diffraction measurement to be found to have, at diffraction angles 2θ= 28.2°, 31.5°, and 49.9°, main peaks that agreed with characteristic peaks of monoclinic-system zirconium oxide described in the ASTM card 36-420. The light transmittance at a wavelength of 550 nm and in an optical path length of 10 mm of the aqueous slurry having a solid content concentration of 5.0% by mass was 1%.

Comparative Example 10 To 199.9 g of pure water, 16.9 g of a commercially available yttrium nitrate aqueous solution (manufactured by Nippon Yttrium Co., Ltd.; concentration in terms of yttrium oxide (Y₂O₃): 8.5% by mass) and 25.4 g of the zirconium nitrate aqueous solution prepared in Comparative Example 6 were added, and thereto, 51.8 g of a 10% by mass potassium hydroxide aqueous solution was added to prepare 294 g of a mixed aqueous solution having an Y/(Y+Zr) atomic ratio of 0.20, a total mass of a solid content (total mass of yttrium nitrate and zirconium nitrate in terms of oxides (Y₂O₃+ZrO₂)) concentration of 2.8% by mass, a pH of 5.2, and an electric conductivity of 47.8 mS/cm. The mixed aqueous solution was charged into a 300 ml SUS 316 autoclave vessel and was subjected to the hydrothermal treatment at 180°C for 6 hours. The internal pressure of the autoclave vessel was 0.82 MPa. The product after the hydrothermal treatment was a white slurry having a pH of 1.8 and an electric conductivity of 51.8 mS/cm. When the slurry was observed under a transmission electron microscope, as the primary particle, cubic particles of 8 nm and spindle-shaped particles having a minor axis of 20 nm and a major axis of 40 nm were mixed. The particle diameter measured by a dynamic light scattering method (measured by an N4 plus apparatus) was 220 nm. The slurry was dried at 120°C and was subjected to a powder X-ray diffraction measurement to be found to have 6 main peaks, and among them, 3 main peaks at diffraction angles 2θ= 30.0°, 50.2°, and 59.5° agreed with characteristic peaks of tetragonal- or cubic-system yttrium oxide-stabilized zirconium oxide described in the ASTM card 30-1468. The other 3 main peaks at diffraction angles 2θ= 28.2°, 31,5°, and 49.9° agreed with characteristic peaks of monoclinic-system zirconium oxide described in the ASTM card 36-420. Therefore, the obtained aqueous gel is of a mixed phase of tetragonal- or cubic-system yttrium oxide-stabilized zirconium oxide and monoclinic-system zirconium oxide. A white slurry obtained by washing the above slurry was washed with pure water using an ultrafiltration membrane to obtain a slurry having a pH of 3.1, an electric conductivity of 0.08 mS/cm, and a solid content concentration of 5.0% by mass. The slurry adjusted to have a solid content concentration of 5.0% by mass had a light transmittance at a wavelength of 550 nm and in an optical path length of 10 mm of 1%.

Comparative Example 11To 199.1 g of pure water, 2.9 g of a commercially available yttrium acetate powder (manufactured by Aldrich Corporation; concentration in terms of yttrium oxide (Y₂O₃): 35.5% by mass; and acetic acid concentration: 54.0% by mass) and 32.0 g of a commercially available zirconium oxyacetate aqueous solution (manufactured by Daiichi Kigenso Kagaku Kogyo Co., Ltd.; concentration in terms of zirconium oxide (ZrO₂): 20.15% by mass; and acetic acid concentration: 12.8% by mass) were added, and thereto, 45.0 g of a 8.6% by mass potassium hydroxide aqueous solution was added to prepare 279 g of a mixed aqueous solution having an Y/(Y+Zr) atomic ratio of 0.20, a COOH group/(Y+Zr) molar ratio of 1.5, a solid content (total mass of yttrium acetate and zirconium acetate in terms of oxides (Y₂O₃+ZrO₂)) concentration of 2.7% by mass, a pH of 10.6, and an electric conductivity of 21.2 mS/cm. The mixed aqueous solution was charged into a 300 ml SUS 316 autoclave vessel and was subjected to the hydrothermal treatment at 180°C for 6 hours. The internal pressure of the autoclave vessel was 0.82 MPa. The product after the hydrothermal treatment was a white slurry having a pH of 8.1 and an electric conductivity of 25.3 mS/cm. The white slurry was washed with pure water by a decantation method to obtain 145 g of a white slurry having a pH of 4,8, an electric conductivity of 0.040 mS/cm, and a solid content of 5.0% by mass. Only by leaving the slurry stand still for several minutes, the slurry became solid-liquid separated. When the white slurry was observed under a transmission electron microscope, although the primary particle was a cubic particle having a maximum value of the primary particle diameter of 10 nm and an average value of the primary particle diameter of 8 nm, secondary aggregates having a size of around 100 to 500 nm and formed by an aggregation of primary particles were observed in the half or more of the whole vision. The particle diameter measured by a dynamic light scattering method (measured by an N4 plus apparatus) was 1,080 nm. The slurry was dried at 120°C and was subjected to a powder X-ray diffraction measurement to be found to have, at diffraction angles 2θ= 30.0°, 50.2°, and 59.5°, main peaks that agreed with characteristic peaks of tetragonal- or cubic-system yttrium oxide-stabilized zirconium oxide described in the ASTM card 30-1468. The X-ray crystallite thereof was 10.7 nm. The above-washed white slurry was adjusted to have a solid content concentration of 5.0% by mass, and the adjusted slurry had a light transmittance at a wavelength of 550 nm and in an optical path length of 10 mm of 0%.

In Table 2, the results of Example 6 to Example 10 and Comparative Example 3 to Comparative Example 11 are shown.

**[Table 2]**

| | COOH group/ (Y + Zr) (molar ratio) | Y/(Y+Zr) (atomic ratio) | Mixed aqueous solution pH | Temperature for hydrothermal treatment (° C.) | Time for hydrothermal treatment (h) | Transmission electron microscope observation | Particle diameter by dynamic light scattering method (nm) | Light transmittance (*1) (%) |
|---|---|---|---|---|---|---|---|---|
| Example 6 | 1.5 | 0.15 | 4.8 | 180 | 21 | 8 nm, cubic particles | 21 | 77 |
| Example 7 | 1.5 | 0.15 | 4.8 | 200 | 6 | 8 nm, cubic particles | 29 | 80 |
| Example 8 | 1.3 | 0.15 | 5.0 | 180 | 6 | 8 nm, cubic particles | 23 | 75 |
| Example 9 | 1.9 | 0.15 | 4.7 | 180 | 6 | 8 nm, cubic particles | 19 | 83 |
| Example 10 (*2) | 1.5 | 0.20 | 5.0 | 180 | 6 | 6 nm, cubic particles | 8 | 96 |
| Example 11 (*2) | 1.5 | 0.20 | 4.9 | 180 | 6 | 6 nm, cubic particles | 10 | 97 |
| Comparative Example 4 | 1.5 | 0.15 | 4.8 | 180 | 1 | 8 nm, cubic particles + amorphous | 310 | 1 |
| Comparative Example 5 | 1.5 | 0.15 | 4.8 | 150 | 21 | amorphous | — | 2 |
| Comparative Example 6 | 1.5 | 0.15 | 4.8 | 300 | 6 | 8 nm, cubic particles | 64 | 53 |
| Comparative Example 7 | 1.0 | 0.15 | 5.5 | 180 | 6 | 8 nm, cubic particles | 69 | 38 |
| Comparative Example 8 | 2.6 | 0.15 | 4.2 | 180 | 6 | 15 nm, cubic particles + 20 nm × 40 nm spindle-shaped particles | 29 | 55 |
| Comparative Example 9 | 0.0 | 0.20 | 1.4 | 180 | 6 | 20nmx40nm spindle-shaped particles + amorphous | 100 | 1 |
| Comparative Example 10 | 0.0 | 0.20 | 5.2 | 180 | 6 | 8 nm, cubic particles + 20nmx40nm spindle-shaped particles | 220 | 1 |
| Comparative Example 11 | 1.5 | 0.20 | 10.6 | 180 | 6 | 100 to 500 nm secondary aggregates of 2 nm, cubic particles | 1080 | 0 |

| | | | | | | | | |
|---|---|---|---|---|---|---|---|---|
| *1 : Light transmittance at a wavelength of 550 nm and in an optical path length of 10 mm of the aqueous sol having a solid content concentration of 5% by mass *2 : Physical properties of aqueous sol | | | | | | | | |

From Example 2 in Table 1 and Example 6 in Example 9 in Table 2, it was indicated that when the COOH group (Y+Zr) molar ratio in a mixed acqueous solution of yttrium acetate and zirconium oxyacetate to be subjected to the hydrothermal treatment is in a range of 1.2 to 2.5, the obtained particle is a cubic yttrium oxide-stabilized zirconium oxide particle having a primary particle diameter of 8 nm and having a secondary particle diameter of 30 nm or less; the slurry prepared to have a solid content concentration of 5.0% by mass has a light transmittance at a wavelength of 550 nm and in an optical path length of 10 mm of 70% or more; and the aqueous sol has high transparency.

On the other hand, when the time for the hydrothermal treatment is so short as 1 hour as in Comparative Example 4 or when the temperature for the hydrothermal treatment is lower than 160°C as in Comparative Example 5, colloidal particles grow insufficiently or not at all, and consequently, an amorphous substance is generated. When the temperature for the hydrothermal treatment is higher than 300°C as in Comparative Example 6, it is apparent that the SUS 316 autoclave vessel is corroded and consequently a metal ion dissolving from the vessel causes the aggregation of the aqueous sol.

From Comparative Example 7, it is apparent that when the COOH group/(Y+Zr) molar ratio in the mixed aqueous solution of yttrium acetate and zirconium oxyacetate to be subjected to the hydrothermal treatment is smaller than 1.2, although the obtained primary particle is in a shape of an 8 nm cubic yttrium oxide-stabilized zirconium oxide particle, the particle measured by a dynamic light scattering method has a particle diameter of larger than 30 nm. Further, it was indicated that the slurry prepared to have a solid content concentration of 5.0% by mass based on the total mass of the slurry has a light transmittance at a wavelength of 550 nm and in an optical path length of 10 mm of less than 70%, so that the slurry has low transparency. The prepared mixed aqueous solution gelated after one day and was unstable.

From Comparative Example 8, it was indicated that when the COOH group/(Y+Zr) molar ratio in the mixed aqueous solution of zirconium acetate and zirconium oxyacetate to be subjected to the hydrothermal treatment is larger than 2.5, the primary particle of the obtained particle was a mixture of 15 nm cubic yttrium oxide-stabilized zirconium oxide particles and spindle-shaped monoclinic-system zirconium oxide particles having a minor axis of 20 nm and a major axis of 40 nm. Further, from the fact that the slurry prepared to have a solid content concentration of 5.0% by mass based on the total mass of the slurry has a light transmittance at a wavelength of 550 nm and in an optical path length of 10 mm of 55%, it is apparent that the obtained aqueous sol has poor transparency.

From Comparative Example 9 and Comparative Example 10, it is apparent that when, instead of yttrium acetate, an yttrium strong acid salt such as yttrium nitrate is used, an yttrium oxide-stabilized zirconium oxide particle having high transparency and being near to monodisperse cannot be obtained.

From Comparative Example 11, it is apparent that when a mixed aqueous solution of zirconium acetate and yttrium acetate of which the pH was adjusted to 8 or more with an alkali such as potassium hydroxide was subjected to the hydrothermal treatment, although the zirconium oxide particle had such a small average primary particle diameter measured by an observation under a transmission electron microscope as 10 nm or less, primary particles formed secondary aggregates, so that an aqueous slurry having no transparency was generated.

### INDUSTRIAL APPLICABILITY

The colloidal particle contained in the yttrium oxide-stabilized zirconium oxide sol obtained by the present invention has a Mohs hardness of 8.5 that is a hardness next to that of corundum (α-alumina) and has a refractive index as high as that of a diamond. Further, the yttrium oxide-stabilized zirconium oxide organic solvent sol obtained by the present invention has high transparency, so that by applying the organic solvent sol to a filler material for a resin, the organic solvent sol is useful as a material for controlling reflex index and mechanical strength properties while maintaining transparency. The colloidal particle contained in the yttrium oxide-stabilized zirconium oxide sol obtained by the present invention has high hardness and high dispersibility, so that the colloidal particle is also useful as a polishing abrasive grain for a precise polishing. Further, the colloidal particle contained in the yttrium oxide-stabilized zirconium oxide sol obtained by the present invention is also useful for a ternary catalyst or a quaternary catalyst for a solid electrolyte of a solid oxide fuel battery and an engine for an automobile.

## Claims

1. A production method of an yttrium oxide-stabilized zirconium oxide aqueous sol, **characterized by** comprising:
a process of subjecting a mixed aqueous solution produced by dissolving an yttrium carboxylate and zirconium oxyacetate in water in an Y/(Y+Zr) atomic ratio in a range of 0.10 to 0.60 to hydrothermal treatment at 160 to 280°C for 2 hours or more.

2. The production method of an yttrium oxide-stabilized zirconium oxide aqueous sol according to claim 1, wherein
the yttrium carboxylate is an acetate or a citrate.

3. The production method of an yttrium oxide-stabilized zirconium oxide aqueous sol according to claim 1 or 2, wherein
a concentration of both the yttrium carboxylate and the zirconium oxyacetate in terms of metal oxides (Y₂O₃+ZrO₂) in the mixed aqueous solution is in a range of 1 to 10% by mass based on a total mass of the mixed aqueous solution.

4. The production method of an yttrium oxide-stabilized zirconium oxide aqueous sol according to any one of claims 1 to 3, wherein
a COOH group/(Y+Zr) molar ratio in the mixed aqueous solution is in a range of 1.2 to 2.5.

5. The production method of an yttrium oxide-stabilized zirconium oxide aqueous sol according to claim 4, wherein
the COOH group/(Y+Zr) molar ratio in the mixed aqueous solution is adjusted to a range of 1.2 to 2.5 by adding acetic acid or citric acid to the mixed aqueous solution.

6. The production method of an yttrium oxide-stabilized zirconium oxide aqueous sol according to any one of claims 1 to 5, wherein
the mixed aqueous solution has a pH of 4.0 to 5.5.

7. The production method of an yttrium oxide-stabilized zirconium oxide aqueous sol according to claim 6, wherein
the pH of the mixed aqueous solution is adjusted to 4.0 to 5.5 by adding acetic acid or citric acid to the mixed aqueous solution.

8. The production method of an yttrium oxide-stabilized zirconium oxide aqueous sol according to any one of claims 1 to 7, further comprising:
a process of subjecting the mixed aqueous solution subjected to the hydrothermal treatment to demineralization treatment.

9. A production method of an yttrium oxide-stabilized zirconium oxide organic solvent sol comprising:
a process of displacing an aqueous medium of the yttrium oxide-stabilized zirconium oxide aqueous sol obtained by the production method as claimed in any one of claims 1 to 8 with an organic solvent by an organic solvent displacing method.

## Patentansprüche

1. Verfahren zur Herstellung eines wässrigen Yttriumoxidstabilisierten Zirkoniumoxidsols, **gekennzeichnet durch** das Umfassen von:
einem Verfahren, in dem eine gemischte wässrige Lösung, die **durch** Auflösen eines Yttriumcarboxylats und
Zirkoniumoxyacetat in Wasser in einem Y/(Y+Zr)- Atomverhältnis im Bereich von 0,10 bis 0,60 hergestellt wird, einer Hydrothermalbehandlung bei 160 bis 280°C über 2 Stunden oder mehr unterzogen wird.

2. Herstellungsverfahren für ein wässriges Yttriumoxidstabilisiertes Zirkoniumoxidsol gemäß Anspruch 1, worin das Yttriumcarboxylat ein Acetat oder ein Zitrat ist.

3. Herstellungsverfahren für ein wässriges Yttriumoxidstabilisiertes Zirkoniumoxidsol gemäß Anspruch 1 oder 2, worin eine Konzentration sowohl des Yttriumcarboxylats als auch des Zirkoniumoxyacetats in Bezug auf Metalloxide (Y₂O₃+ZrO₂) in der gemischten wässrigen Lösung in einem Bereich von 1 bis 10 Massen% auf Basis der gesamten Masse der gemischten wässrigen Lösung ist.

4. Herstellungsverfahren für ein wässriges Yttriumoxidstabilisiertes Zirkoniumoxidsol gemäß irgendeinem der Ansprüche 1 bis 3, worin ein COOH-Gruppe/(Y+Zr)- Molverhältnis in der gemischten wässrigen Lösung in einem Bereich von 1,2 bis 2,5 ist.

5. Herstellungsverfahren für ein wässriges Yttriumoxidstabilisiertes Zirkoniumoxidsol gemäß Anspruch 4, worin das COOH-Gruppe/(Y+Zr)-Molverhältnis in der gemischten wässrigen Lösung auf einen Bereich von 1,2 bis 2,5 durch Zugabe von Essigsäure oder Zitronensäure zur gemischten wässrigen Lösung eingestellt wird.

6. Herstellungsverfahren für ein wässriges Yttriumoxidstabilisiertes Zirkoniumoxidsol gemäß irgendeinem der Ansprüche 1 bis 5, worin die gemischte Lösung einen pH-Wert von 4,0 bis 5,5 hat.

7. Herstellungsverfahren für ein wässriges Yttriumoxidstabilisiertes Zirkoniumoxidsol gemäß Anspruch 6, worin der pH-Wert der gemischten wässrigen Lösung durch Zugabe von Essigsäure oder Zitronensäure zur gemischten wässrigen Lösung auf 4,0 bis 5,5 eingestellt wird.

8. Herstellungsverfahren für ein wässriges Yttriumoxidstabilisiertes Zirkoniumoxidsol gemäß irgendeinem der Ansprüche 1 bis 7, weiterhin umfassend:
ein Verfahren, in dem die gemischte wässrige Lösung, die der Hydrothermalbehandlung unterzogen wurde, einer Demineralisierungsbehandlung unterzogen wird.

9. Herstellungsverfahren für ein Yttriumoxid-stabilisiertes Zirkoniumoxidsol in einem organischen Lösungsmittel, umfassend:
ein Verfahren des Verdrängens eines wässrigen Mediums des wässrigen Yttriumoxid-stabilisierten Zirkoniumoxidsols, das durch das Herstellungsverfahren gemäß irgendeinem der Ansprüche 1 bis 8 erhalten wurde, mit einem organischen Lösungsmittel durch ein organisches Lösungsmittel-Verdrängungsverfahren.

## Revendications

1. Procédé de production d'un sol aqueux d'oxyde de zirconium stabilisé avec de l'oxyde d'yttrium,
**caractérisé en ce qu'**il comprend :
un processus consistant à soumettre une solution aqueuse mélangée, produite en dissolvant un carboxylate d'yttrium et un oxyacétate de zirconium dans de l'eau dans un rapport atomique Y/(Y+Zr) se trouvant dans une plage allant de 0,10 à 0,60, à un traitement hydrothermal à une température allant de 160 à 280°C pendant 2 heures ou plus.

2. Procédé de production d'un sol aqueux d'oxyde de zirconium stabilisé avec de l'oxyde d'yttrium selon la revendication 1, dans lequel
le carboxylate d'yttrium est un acétate ou un citrate.

3. Procédé de production d'un sol aqueux d'oxyde de zirconium stabilisé avec de l'oxyde d'yttrium selon la revendication 1 ou 2, dans lequel
une concentration à la fois du carboxylate d'yttrium et de l'oxyacétate de zirconium en termes d'oxydes métalliques (Y₂O₃+ZrO₂) dans la solution aqueuse mélangée se trouve dans une plage allant de 1 à 10% en masse sur la base d'une masse totale de la solution aqueuse mélangée.

4. Procédé de production d'un sol aqueux d'oxyde de zirconium stabilisé avec de l'oxyde d'yttrium selon l'une quelconque des revendications 1 à 3, dans lequel
un rapport molaire de groupe COOH/(Y+Zr) dans la solution aqueuse mélangée se trouve dans une plage allant de 1,2 à 2,5.

5. Procédé de production d'un sol aqueux d'oxyde de zirconium stabilisé avec de l'oxyde d'yttrium selon la revendication 4, dans lequel
le rapport molaire de groupe COOH/(Y+Zr) dans la solution aqueuse mélangée est réglé à une plage allant de 1,2 à 2,5 en ajoutant de l'acide acétique ou de l'acide citrique à la solution aqueuse mélangée.

6. Procédé de production d'un sol aqueux d'oxyde de zirconium stabilisé avec de l'oxyde d'yttrium selon l'une quelconque des revendications 1 à 5, dans lequel
la solution aqueuse mélangée a un pH allant de 4,0 à 5,5.

7. Procédé de production d'un sol aqueux d'oxyde de zirconium stabilisé avec de l'oxyde d'yttrium selon la revendication 6, dans lequel
le pH de la solution aqueuse mélangée est réglé entre 4,0 et 5,5 en ajoutant de l'acide acétique ou de l'acide citrique à la solution aqueuse mélangée.

8. Procédé de production d'un sol aqueux d'oxyde de zirconium stabilisé avec de l'oxyde d'yttrium selon l'une quelconque des revendications 1 à 7, comprenant en outre :
un processus consistant à soumettre la solution aqueuse mélangée soumise au traitement hydrothermal à un traitement de déminéralisation.

9. Procédé de production d'un sol de solvant organique d'oxyde de zirconium stabilisé avec de l'oxyde d'yttrium comprenant :
un processus consistant à remplacer un milieu aqueux du sol aqueux d'oxyde de zirconium stabilisé avec de l'oxyde d'yttrium obtenu par le procédé de production tel que revendiqué dans l'une quelconque des revendications 1 à 8, avec un solvant organique par un procédé de remplacement de solvant organique.
